# EUROPEAN PATENT APPLICATION

(11) **EP 4 503 210 A1**
(43) Date of publication of application: **05.02.2025**
(21) Application number: 23779820.2
(22) Date of filing: 20.03.2023
(51) Int. Cl.: H01M 8/0284, H01M 8/10

(54) **FUEL BATTERY STACK AND FUEL BATTERY**

(30) Priority: 31.03.2022 JP 2022060056
(71) Applicant: SHIN-ETSU CHEMICAL CO., LTD., Tokyo 1000005 (JP)
(72) Inventor: ASAHI Tomoyuki, Annaka-shi, Gunma 379-0224 (JP); TAIRA Yujiro, Annaka-shi, Gunma 379-0224 (JP); FUKUDA Kenichi, Annaka-shi, Gunma 379-0224 (JP)
(74) Representative: Angerhausen, Christoph
(86) International application number: PCT/JP2023/010831
(87) International publication number: WO 2023/189804

(57) **Abstract**

Provided are a fuel battery stack including a seal member that can be industrially advantageously manufactured and that has excellent hydrofluoric acid resistance and a fuel battery including the fuel battery stack. The fuel battery stack is formed by stacking together a plurality of fuel battery cells, each including a pair of separators and a membrane electrode assembly held therebetween. Each of the separators has a seal member disposed thereon. The seal member is a cured product of a perfluoropolyether compound-containing curable composition.

## Description

### Technical Field

The present invention relates to a fuel battery stack and a fuel battery including the fuel battery stack.

### Background Art

Fuel batteries have been considered promising as next-generation power generation devices because of their high power generation efficiency and very low environmental load. Polymer electrolyte fuel cells (PEFCs) have attracted attention as in-vehicle internal combustion engines because they can be made smaller and lighter and have high power density.

A fuel battery includes a plurality of fuel battery cells stacked together. **In** addition, each fuel battery cell includes an electrode member including a membrane electrode assembly (MEA) and a pair of separators holding the electrode member therebetween.

Each separator has a first surface along which a fuel gas (e.g., hydrogen) flows and a second surface along which an oxidant gas (e.g., air or oxygen) flows. The separators have through-holes extending in the thickness direction, and the through-holes form flow channels for the reactant gases. Seal members are disposed alongside the thickness direction in a shape of frame around, for example, the electrode member and the through-holes on both surfaces of the separators. Compression by clamping force on both outer sides in the stacking direction causes the separators to come into contact with opposite members. This prevents leakage of a fluid such as a gas from the flow channels so that the fuel battery can operate stably.

In addition, the membrane electrode assembly (MEA), which is a power generation unit of a polymer electrolyte fuel cell, includes a fuel electrode (anode), an electrolyte membrane, and an air electrode (cathode). Fluorinated polymers having sulfonic acid groups are mainly used for the electrolyte membrane. Accordingly, the seal members are required to be resistant to sulfuric acid and hydrofluoric acid originated from the electrolyte membrane.

Patent document 1 discloses a seal member resistant to sulfuric acid and hydrofluoric acid; however, there is room for improvement in its resistance.

### Prior Art Documents

### Patent documents

Patent document 1: JP-A-2017-016813

### Summary of Invention

### Technical Problem

Accordingly, an object of the present invention is to provide a fuel battery stack including a seal member that can be industrially advantageously manufactured and that has excellent hydrofluoric acid resistance and a fuel battery including the fuel battery stack. Solution to Problem

The inventors have conducted intensive studies to solve the foregoing problem and have consequently found that the following fuel battery stack can achieve the foregoing object, thus completing the present invention.

That is, the present invention provides the following fuel battery stack and fuel battery:
[1] A fuel battery stack formed by stacking together a plurality of fuel battery cells, each including a pair of separators and a membrane electrode assembly held therebetween, wherein each of the separators has a seal member disposed thereon, the seal member being a cured product of a perfluoropolyether compound-containing curable composition.
[2] The fuel battery stack according to [1], wherein the perfluoropolyether compound has an alkenyl group.
[3] The fuel battery stack according to [1] or [2], wherein the perfluoropolyether compound-containing curable composition contains:
   (A) a perfluoropolyether polymer having at least two alkenyl groups per molecule;
   (B) a fluorine-modified organosilicon compound having two or more hydrogen atoms bonded to silicon atoms per molecule;
   (C) a hydrosilylation reaction catalyst; and
   (D) a reinforcing filler.
[4] The fuel battery stack according to [3], wherein the component (A) is at least one selected from perfluoropolyether compounds represented by the following general formulae (1) and (2):

   Rf-(ZWβ)₂ (1)

   Rf-(Q-(Y)δ-B)₂ (2)

   wherein Rf is a divalent perfluoropolyether group, Z is independently a single bond or a divalent to octavalent organic group that may contain a nitrogen atom, an oxygen atom, a silicon atom, a phosphorus atom, or a sulfur atom and that may be halogen-substituted, W is independently a monovalent organic group having an alkenyl group at an end thereof, β is a number of 1 to 7, Q is independently a single bond or a divalent organic group, each δ is independently a number of 1 to 10, Y is independently a divalent organic group having an alkenyl group, and B is independently a hydrogen atom, an alkyl group having 1 to 4 carbon atoms, or a halogen atom.
[5] The fuel battery stack according to [3] or [4], wherein the perfluoropolyether compound-containing curable composition contains:
   the component (A) in an amount of 100 parts by mass;
   the component (B) in an amount such that an amount of hydrogen atoms bonded to silicon atoms (SiH groups) in the component (B) is 0.5 to 3 mol per mole of alkenyl groups contained in the composition;
   the component (C) in an amount of 0.1 to 2,000 ppm in terms of mass of platinum group metal atoms with respect to a mass of the component (A); and
   the component (D) in an amount of 10 to 40 parts by mass.
[6] The fuel battery stack according to any one of [3] to [5], wherein the perfluoropolyether compound-containing curable composition further contains a hydrosilylation reaction control agent (E).
[7] The fuel battery stack according to any one of [3] to [6], wherein the perfluoropolyether compound-containing curable composition further contains, as an adhesion-imparting agent (F), an organopolysiloxane having, per molecule, a hydrogen atom directly bonded to a silicon atom (SiH group), a monovalent perfluoroalkyl group or a monovalent perfluorooxyalkyl group, and an epoxy group and/or a trialkoxysilyl group bonded to a silicon atom via a divalent hydrocarbon group that may contain an oxygen atom.
[8] A fuel battery including the fuel battery stack according to any one of [1] to [7].

### Advantageous Effects of Invention

According to the present invention, since the seal member has excellent hydrofluoric acid resistance, a fuel battery stack that can maintain excellent sealing properties after operation for a long period of time and a fuel battery including the fuel battery stack can be provided.

### Brief Description of Drawings

[FIG. 1] FIG. 1 is a schematic perspective view of a fuel battery according to an embodiment of the present invention.
[FIG. 2] FIG. 2 is an exploded perspective view of a fuel battery cell of the fuel battery according to the embodiment of the present invention.
[FIG. 3] FIG. 3 is a top view of a separator of the fuel battery cell according to the embodiment of the present invention.

### Description of Embodiments

An embodiment of a fuel battery stack of the present invention will be described below. The fuel battery stack of the present invention is not limited to the following embodiment; rather, the present invention can be practiced in various embodiments with improvements, omissions, changes, and other modifications that can be made by those skilled in the art without departing from the spirit of the present invention.

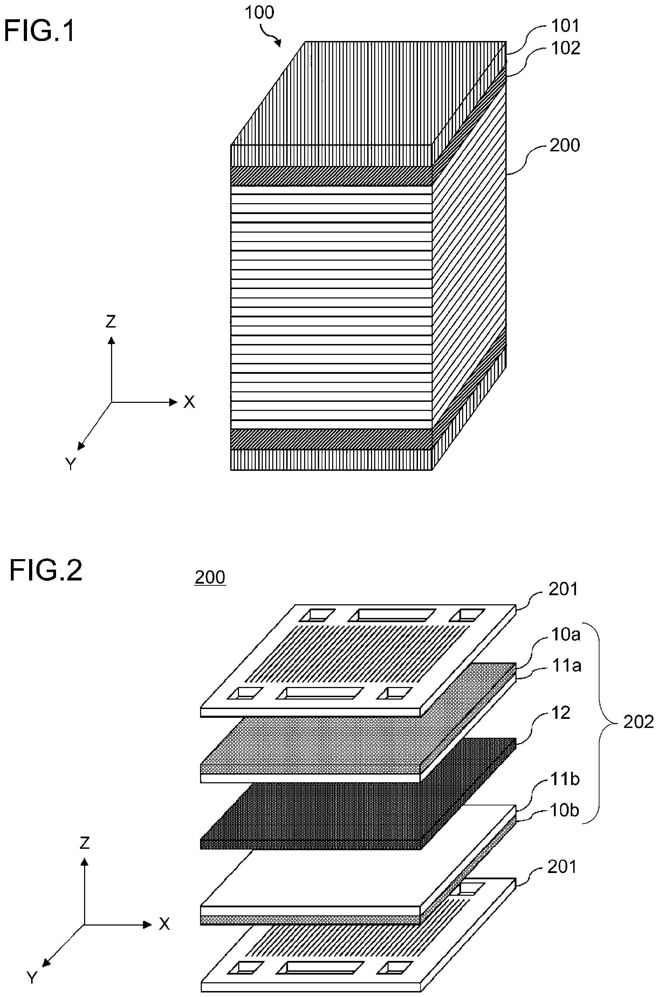

FIG. 1 is a perspective view schematically illustrating the external configuration of a fuel battery of an embodiment of the present invention.

As illustrated in FIG. 1, a fuel battery 100 of this embodiment includes a plurality of fuel battery cells 200 stacked together, a pair of end plates 102 holding the plurality of fuel battery cells stacked together on the outer sides in the stacking direction, and clamping members 101 holding the pair of end plates on the outer sides in the stacking direction of the fuel battery cells.

FIG. 2 is an exploded perspective view schematically illustrating a fuel battery cell of the embodiment of the present invention.

As illustrated in FIG. 2, each of the fuel battery cells 200 of this embodiment includes a membrane electrode assembly (MEA) 202 and a pair of separators 201 holding the membrane electrode assembly (MEA) therebetween. The membrane electrode assembly (MEA) includes, for example, a fuel gas diffusion layer (GDL) 10a forming an electrically conductive anode, a fuel electrode catalyst layer (CL) 11a having a metal catalyst supported thereon, an electrolyte membrane 12, an oxidant gas diffusion layer (GDL) 10b forming an electrically conductive cathode, and an oxidant electrode catalyst layer (CL) 11b having a metal catalyst supported thereon.

### <Electrolyte Membrane>

The electrolyte membrane 12 is an ionically conductive polymer electrolyte membrane. Examples of polymer electrolytes that can be used for the polymer electrolyte membrane include tetrafluoroethylene-perfluorovinyl ether sulfonic acid copolymers, aromatic polymers such as sulfonated polyimides, and aliphatic polymers such as polyvinylsulfonic acid and polyvinylphosphoric acid. Specific product names of these polymer electrolyte membranes include Nafion (registered trademark) manufactured by DuPont, Aquivion (registered trademark) manufactured by Solvay, Aciplex (registered trademark) manufactured by Asahi Kasei Corporation, and Flemion (registered trademark) manufactured by AGC Inc.

### <Gas Diffusion Layer >

The gas diffusion layers 10a and 10b can uniformly diffuse a fuel gas and an oxidant gas supplied to flow channels throughout the catalyst layers 11a and 11b.

The material for the gas diffusion layers may be any material that can be used for fuel gas diffusion layers and oxidant gas diffusion layers for fuel batteries. Examples of such materials include carbon with gas diffusivity, electric conductivity, and gas permeability, such as carbon paper, carbon cloth, carbon felt, and porous carbon. Other examples of materials for the gas diffusion layers include porous metals such as metal meshes and foamed metals.

### <Catalyst Layer>

The catalyst layers 11a and 11b can promote the reaction of the fuel gas and the oxidant gas by using a catalyst. The catalyst layers include a catalyst, a support on which the catalyst is supported, and an ionomer covering them.

Examples of catalysts include metals such as platinum, iridium, tungsten, palladium, ruthenium, rhodium, and palladium and mixtures and alloys containing these metals.

Examples of materials for the support on which the catalyst is supported include activated carbon, carbon nanowalls, carbon black, carbon nanotubes, carbon nanohorns, glassy carbon, coke, natural graphite, mesophase carbon microbeads, mesoporous carbon, glassy carbon powders, and electrically conductive porous metal compounds having pores.

The material for the ionomer may be any ionically conductive compound. Examples of such compounds include compounds having a sulfonic group, compounds having an imide group, compounds having a carboxy group, and compounds having a phosphonic group. Examples of compounds having a sulfonic group include tetrafluoroethylene-perfluorovinyl ether sulfonic acid copolymers, and specific product names thereof include Nafion (registered trademark) manufactured by DuPont, Aquivion (registered trademark) manufactured by Solvay, Aciplex (registered trademark) manufactured by Asahi Kasei Corporation, and Flemion (registered trademark) manufactured by AGC Inc. Examples of compounds having an imide group include tetrafluoroethylene-perfluorovinyl ether sulfonimidic acid copolymers. Examples of ionomers having a carboxyl group include tetrafluoroethylene-perfluorovinyl ether carboxylic acid copolymers. Examples of compounds having a phosphonic acid group include tetrafluoroethylene-perfluorovinyl ether phosphonic acid copolymers.

### <Separator>

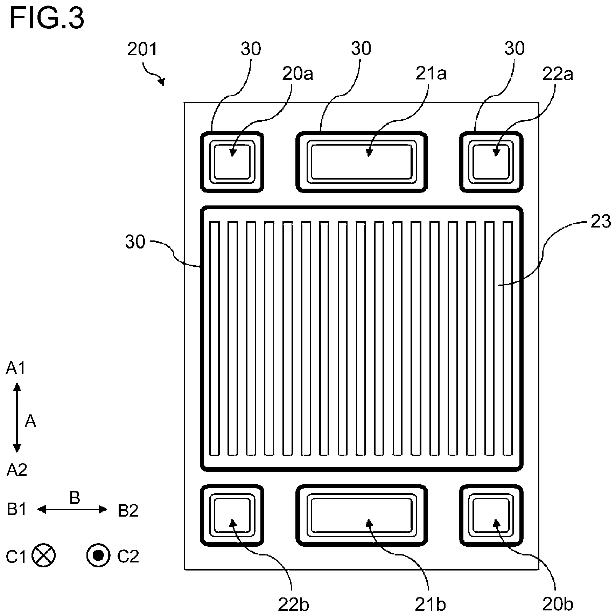

FIG. 3 is a top view schematically illustrating a separator of a fuel battery cell of the embodiment of the present invention.

As illustrated in FIG. 3, each separator 201 has an oxidant gas inlet 20a, an oxidant gas outlet 20b, a cooling medium inlet 21a, a cooling medium outlet 21b, a fuel gas inlet 22b, a fuel gas outlet 22a, and flow channel grooves 23. The separator 201 also has seal members 30 disposed thereon.

Gas-impermeable electrically conductive materials are used for the separators. Examples of such separators include carbon separators and metal separators.

Examples of carbon separators include those obtained by mixing and dispersing a carbon powder as an electrically conductive filler in a resin material as a matrix and press-molding the resulting composite material into a shape of flat plate formed with flow channels for gas and cooling medium. The carbon powder is not particularly limited, and examples thereof include artificial graphite, amorphous graphite, expandable graphite, flake graphite, acetylene black, carbon black, kish graphite, ketjen black, coke breeze, and mixtures thereof. The resin material is not particularly limited, and examples thereof include thermosetting resins such as phenolic resins, polyethylene resins, and polypropylene resins and thermoplastic resins such as polyphenylene sulfide resins and tetrafluoroethylene-perfluoroalkoxyethylene copolymer resins.

Examples of metal separators include those obtained by press-forming a metal substrate into a shape of flat plate formed with flow channels for gas and cooling medium. The metal that forms the metal substrate is not particularly limited, and examples thereof include aluminum, cobalt, chromium, zirconium, tungsten, titanium, iron, copper, manganese, molybdenum, nickel, and alloys of two or more of these metals. Titanium and stainless steel are preferred because of their high electric conductivity and high corrosion resistance. Stainless steel is an alloy containing iron as a main component and chromium in an amount of 10.5% or more. Examples of stainless steel include austenitic stainless steel, ferritic stainless steel, martensitic stainless steel, and austenitic-ferritic duplex stainless steel.

The metal substrate may have a plating layer formed on the surface thereof by metal plating treatment from the viewpoint of, for example, corrosion resistance. Examples of metal plating include tin plating, nickel plating, and multilayer plating and alloy plating thereof.

Although the average thickness of the separators is not particularly limited, the separators can have an average thickness of, for example, 0.05 to 0.5 mm. When the average thickness of the separators is too small, the separators have insufficient rigidity and are therefore difficult to maintain in a predetermined shape. When the average thickness of the separators is too large, the separators are disadvantageous in terms of size and weight reductions.

Each separator 201 has, in the direction indicated by one end A1 of the arrow A, the oxidant gas inlet 20a, the cooling medium inlet 21a, and the fuel gas outlet 22a, which are arranged in the direction from one end B1 of the arrow B to the other end B2 of the arrow B.

The oxidant gas inlets 20a of the separators 201 are connected to each other and supply an oxidant gas (e.g., air or oxygen) in the direction indicated by the arrow C, which is the stacking direction of the plurality of separators 201. The cooling medium inlets 21a of the separators 201 are connected to each other and supply a cooling medium (e.g., ethylene glycol, oil, or pure water) in the direction indicated by the arrow C. The fuel gas outlets 22a of the separators 201 are connected to each other and discharge a fuel gas (e.g., hydrogen) in the direction indicated by the arrow C.

Each separator 201 has, in the direction indicated by one end A2 of the arrow A, the oxidant gas outlet 20b, the cooling medium outlet 21b, and the fuel gas inlet 22b, which are arranged in the direction from one end B2 of the arrow B to the other end B1 of the arrow B.

The oxidant gas outlets 20b of the separators 201 are connected to each other and discharge the oxidant gas (e.g., air or oxygen) in the direction indicated by the arrow C, which is the stacking direction of the plurality of separators 201. The cooling medium outlets 21b of the separators 201 are connected to each other and discharge the cooling medium (e.g., ethylene glycol, oil, or pure water) in the direction indicated by the arrow C. The fuel gas inlets 22b of the separators 201 are connected to each other and supply the fuel gas (e.g., hydrogen) in the direction indicated by the arrow C.

The positions, shapes, sizes, and numbers of the cooling medium inlets, the cooling medium outlets, the oxidant gas inlets, the oxidant gas outlets, the fuel gas inlets, and the fuel gas outlets are not limited to those in this embodiment, but may be set as appropriate depending on the target design specifications.

### <Gas Flow Channel>

The gas flow channels are flow channels formed in the fuel battery separators to supply the reactant gases, such as the oxidant gas and the fuel gas, supplied from outside the fuel battery cells to the gas diffusion layers and discharge these gases outside the fuel battery cells.

### <Operation of Fuel Battery>

The oxidant gas flows through the flow channels formed in the separators and is supplied. Furthermore, the oxidant gas permeates through the gas diffusion layers and flows into the catalyst layers. In addition, the fuel gas flows through the flow channel grooves formed in the separators and is supplied to the anodes. Furthermore, the fuel gas permeates through the gas diffusion layers and flows into the catalyst layers. The supply of the fuel gas and the oxidant gas induces an electrochemical reaction to generate a direct-current voltage between the anodes and the cathodes.

### <Position Where Seal Member is Disposed>

The fuel battery stack of the present invention has seal members disposed on at least the separators. The seal members are cured products of a perfluoropolyether compound-containing curable composition. Although FIG. 3 illustrates, by way of example, a diagram in which the seal members 30 are disposed around the oxidant gas inlet 20a, the oxidant gas outlet 20b, the cooling medium inlet 21a, the cooling medium outlet 21b, the fuel gas inlet 22b, the fuel gas outlet 22a, and the flow channel grooves 23 of each separator, the positions where the seal members are disposed are not limited thereto. That is, the positions where the seal members are disposed may be determined depending on, for example, the type and structure of the fuel battery. That is, the seal members of the fuel battery stack of the present invention can be used at, for example, positions requiring air-tightness or liquid-tightness. **In** addition, the seal members of the fuel battery stack of the present invention may be disposed at all of the positions that need to be sealed or may be disposed at some of the positions that need to be sealed. The positions to be sealed may be, for example, between components that form adjacent fuel battery cells, between each pair of separators holding the MEA therebetween, between the electrolyte membrane and the separators, and around the periphery of the MEA.

### <Seal Member>

Next, a seal member (a cured product of a perfluoropolyether compound-containing curable composition) will be described in detail.

The perfluoropolyether compound contained in the perfluoropolyether compound-containing curable composition preferably has an alkenyl group.

In addition, the perfluoropolyether compound-containing curable composition preferably contains the following components (A), (B), (C), and (D) and may optionally further contain a component (E), a component (F), and/or other components.

### [Component (A)]

The component (A) is a perfluoropolyether polymer having at least two alkenyl groups per molecule and is a base agent (base polymer) of the perfluoropolyether compound-containing curable composition for the seal member.

The alkenyl groups contained in the component (A) preferably have 2 to 8 carbon atoms, particularly 2 to 6 carbon atoms, and have a CH₂=CH- structure, and examples thereof include a vinyl group, an allyl group, a propenyl group, an isopropenyl group, a butenyl group, and a hexenyl group. Of these, a vinyl group and an allyl group are particularly preferred.

The component (A) preferably has an alkenyl group content of 0.005 to 0.3 mol/100 g, more preferably 0.007 to 0.2 mol/100 g. When the alkenyl group content is 0.005 mol/100 g or more, the composition exhibits a sufficient degree of crosslinking and causes no problem with curing. On the other hand, when the alkenyl group content is 0.3 mol/100 g or less, the mechanical properties of the cured product (perfluoropolyether-based rubber elastomer) obtained by curing the composition are not impaired. The alkenyl group content in the component (A) can be calculated from ¹H-NMR measurement.

The perfluoropolyether structure in the main chain of the component (A) contains many repeating units (perfluorooxyalkylene units) represented by:

-CₐF₂ₐO-
wherein a is a number of 1 to 6, and examples thereof include those represented by the following general formula (3):

   -(CₐF₂ₐO)_{b}- (3),
wherein a is a number of 1 to 6, and b is a number of 1 to 300, preferably a number of 1 to 200.

Examples of the repeating units represented by -CₐF₂ₐO- include units represented by the following formulae:

-CF₂O-

-CF₂CF₂O-

-CF₂CF₂CF₂O-

-CF(CF₃)CF₂O-

-CF(CF₃)OCF₂-

-CF₂OCF(CF₃)-

-CF₂CF₂CF₂CF₂O-

-CF₂CF₂CF₂CF₂CF₂O-

-CF₂CF₂CF₂CF₂CF₂CF₂O-

-C(CF₃)₂O-.

Of these, particularly preferred are repeating units represented by the following formulae:

-CF₂O-

-CF₂CF₂O-

-CF₂CF₂CF₂O-

-CF(CF₃)CF₂O-

-CF(CF₃)OCF₂-

-CF₂OCF(CF₃)-.

The perfluoropolyether structure of the component (A) may be composed of one of the above types of repeating units or may be composed of a combination of two or more of the above types of repeating units.

Preferred examples of perfluoropolyether polymers having at least two alkenyl groups per molecule as the component (A) include perfluoropolyether compounds represented by the following general formulae (1) and (2):

Rf-(ZWβ)₂ (1)

Rf-(Q-(Y)δ-B)₂ (2)

In the formula (1), Rf is a divalent perfluoropolyether group, Z is independently a single bond or a divalent to octavalent organic group that may contain a nitrogen atom, an oxygen atom, a silicon atom, a phosphorus atom, or a sulfur atom and that may be fluorine-substituted, W is independently a monovalent organic group having an alkenyl group at an end thereof, and β is a number of 1 to 7, preferably a number of 1 to 3. In the formula (2), Rf is a divalent perfluoropolyether group, Q is independently a single bond or a divalent organic group, each δ is independently a number of 1 to 10, Y is independently a divalent organic group having an alkenyl group, and B is independently a hydrogen atom, an alkyl group having 1 to 4 carbon atoms, or a halogen atom.

In the formulae (1) and (2), Rf is a divalent perfluoropolyether group. For example, Rf may be one group represented by the general formula (3) or a combination of two or more groups represented by the general formula (3). Rf is preferably a group represented by any of the following formulae:

{-CF(CF₃)OCF₂-}ₐ{ -CF₂OCF(CF₃)-}_{b}

wherein a and b are each a number of 1 or more, and a + b is 2 to 300,

   {-CF₂O-}ₚ{-CF₂CF₂O-}_{q}
wherein p and q are each a number of 1 or more, and p + q is 2 to 300,

   {-CF₂CF₂CF₂O-}_{p'}
wherein p' is a number of 2 to 300, and

   {-CF₂CF₂CF₂CF₂O-}_{p"}{-CF₂CF₂O-}_{q"}
wherein p" and q" are each a number of 1 or more, and p" + q" is 2 to 300.

In the formula (1), Z is independently a single bond or a divalent to octavalent organic group that may contain a nitrogen atom, an oxygen atom, a silicon atom, a phosphorus atom, or a sulfur atom and that may be halogen-substituted. The divalent to octavalent organic group can be represented by (L)ₑ-M (wherein e is a number of 1 to 7, preferably a number of 1 to 3).

Here, L is a single bond, a carbonyl bond, an oxygen atom, a sulfur atom, or a divalent organic group and is a group linking the Rf group to the M group (or the W group).

The divalent organic group represented by L is preferably an unsubstituted or substituted divalent hydrocarbon group having 2 to 12 carbon atoms. Examples of divalent hydrocarbon groups having 2 to 12 carbon atoms include alkylene groups such as an ethylene group, a propylene group (trimethylene group or methylethylene group), a butylene group (tetramethylene group or methylpropylene group), a hexamethylene group, and an octamethylene group, arylene groups such as a phenylene group, and combinations of two or more thereof (e.g., an alkylene-arylene group). The divalent hydrocarbon group having 2 to 12 carbon atoms may contain one or more structures selected from the group consisting of an amide bond, an ether bond, a carbonyl bond, an ester bond, a diorganosilylene group such as a dimethylsilylene group, and a group represented by -Si[OH][(CH₂)_{f}Si(CH₃)₃]- (wherein f is a number of 2 to 4), and may have some or all of the hydrogen atoms bonded to the carbon atoms replaced by halogen atoms such as fluorine atoms and iodine atoms. **In** particular, the divalent organic group is preferably an unsubstituted or substituted alkylene group having 2 to 4 carbon atoms, a phenylene group, or a combination thereof.

The number of carbon atoms in the divalent hydrocarbon group having 2 to 12 carbon atoms that is preferred as the divalent organic group is a count of the number of carbon atoms in the unsubstituted divalent hydrocarbon group; for example, when the divalent hydrocarbon group is interrupted by a structure as described above, such as a dimethylsilylene group, the number of carbon atoms in that structure is not counted.

For example, L may be a group represented by any of the following structures or a group in which two or more thereof are bonded together: 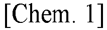 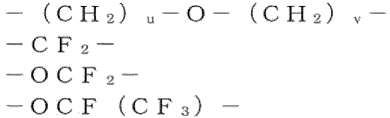 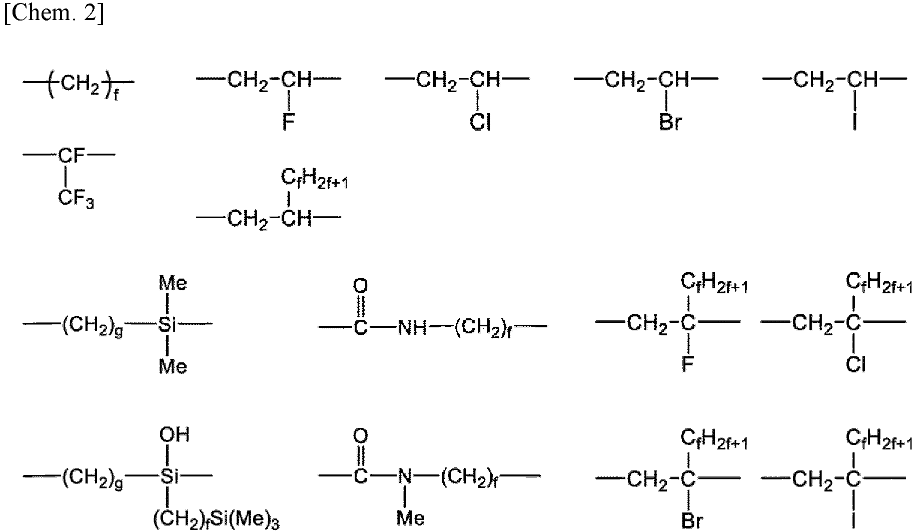 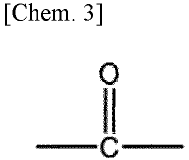 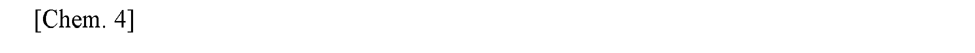 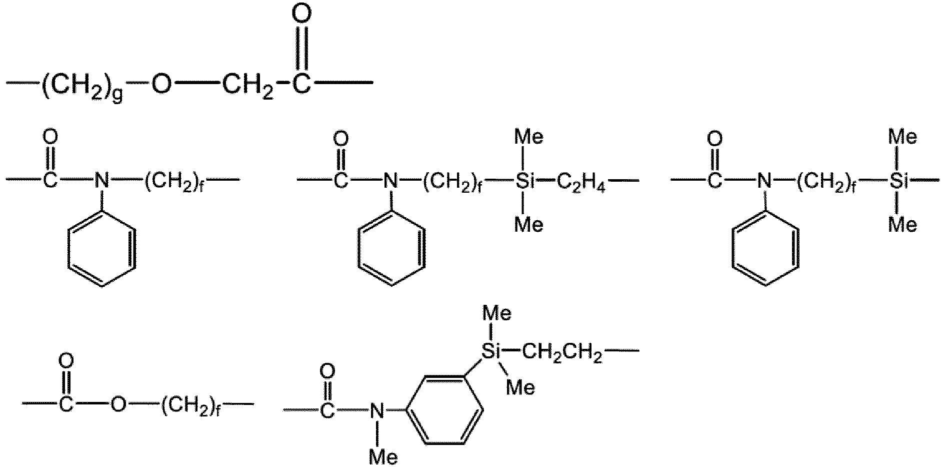 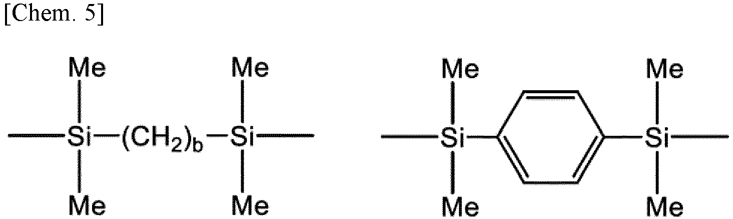 wherein f is a number of 2 to 4, b is a number of 2 to 6, preferably a number of 2 to 4, u and v are each independently a number of 1 to 4, g is a number of 2 to 4, and Me is a methyl group.

In addition, M is a single bond, a nitrogen atom, a silicon atom, a carbon atom, a phosphorus atom, or a divalent to octavalent ((e + 1)-valent) organic group that may contain at least one of a nitrogen atom, a silicon atom, a carbon atom, and a phosphorus atom. Specifically, M is a group selected from a single bond, a divalent group represented by -R¹₂C-, a divalent group represented by -R³₂Si-, a divalent group represented by -NR⁴-, a trivalent group represented by -N=, a trivalent group represented by -P=, a trivalent group represented by -PO=, a trivalent group represented by -R¹C=, a trivalent group represented by -R³Si=, a tetravalent group represented by -C≡, a tetravalent group represented by -O-C≡, and a tetravalent group represented by -Si=, or is a divalent to octavalent siloxane residue. In the formula (1), M in Z is a group linking L (or the Rf group) to the W group.

In the above, each R¹ is independently an alkyl group preferably having 1 to 3 carbon atoms, a hydroxyl group, a group having a repeating unit of an oxyalkylene group that have 1 to 3 carbon atoms and that may be interrupted by a diorganosiloxane structure having 2 to 51 silicon atoms, or a silyl ether group represented by R²₃SiO-, and each R² is independently a hydrogen atom, an alkyl group preferably having 1 to 3 carbon atoms, an aryl group such as a phenyl group, or an alkoxy group having 1 to 3 carbon atoms. Each R³ is independently an alkyl group preferably having 1 to 3 carbon atoms, an alkenyl group having 2 or 3 carbon atoms, an alkoxy group having 1 to 3 carbon atoms, or a chloro group. R⁴ is an alkyl group having 1 to 3 carbon atoms or an aryl group having 6 to 10 carbon atoms such as a phenyl group. When M is a siloxane residue, M preferably has a linear, branched, or cyclic organopolysiloxane structure having 2 to 51 silicon atoms, preferably 2 to 13 silicon atoms, more preferably 2 to 11 silicon atoms, even more preferably 2 to 5 silicon atoms. The organopolysiloxane preferably has an unsubstituted or fluorine-substituted alkyl group having 1 to 8 carbon atoms, more preferably 1 to 4 carbon atoms, such as a methyl group, an ethyl group, a propyl group, a butyl group, or C₃F₇-C₃H₆-, or a phenyl group. In addition, the organopolysiloxane may contain a silalkylene structure in which two silicon atoms are bonded together via an alkylene group, that is, Si-(CH₂)ₙ-Si. In the formula, n is a number of 2 to 6, preferably a number of 2 to 4.

Examples of such M include the following groups: 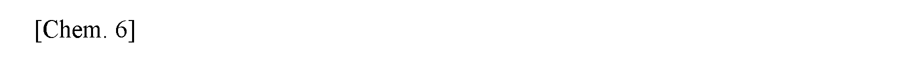 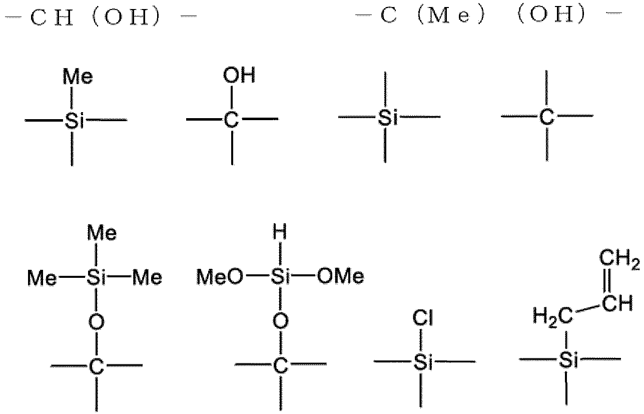 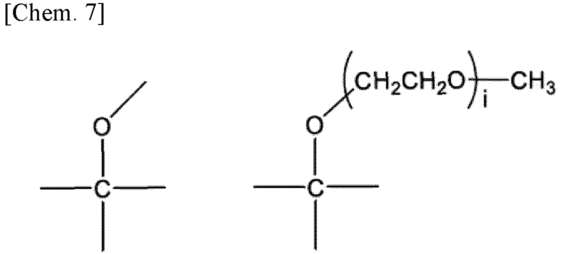 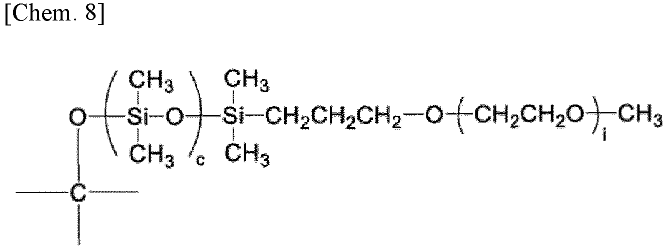 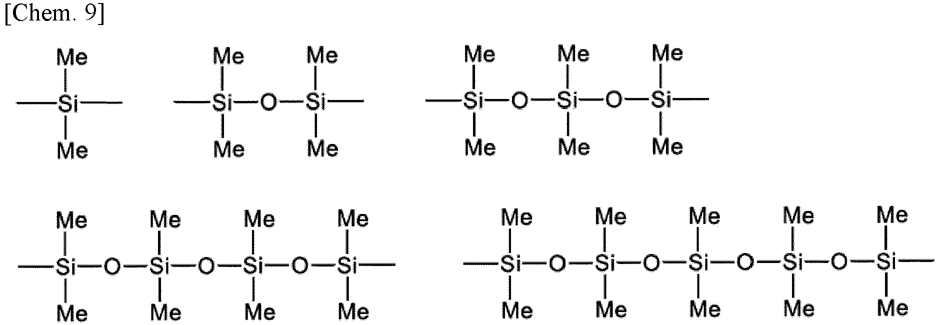 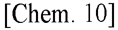 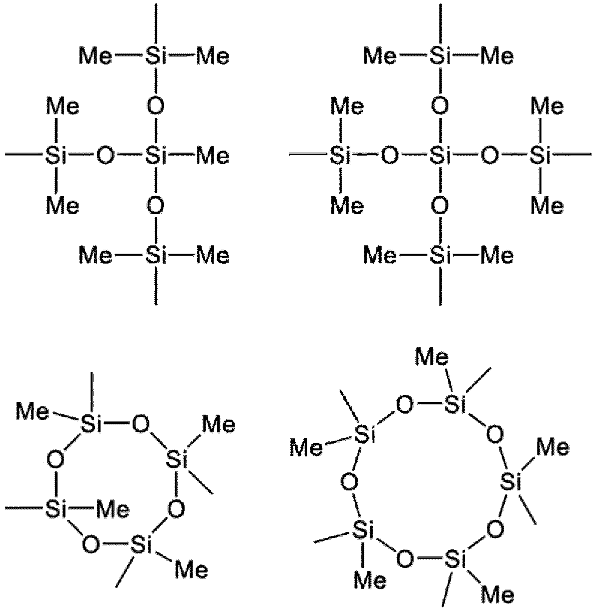 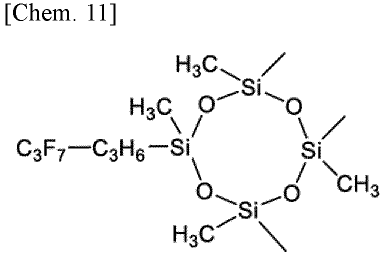 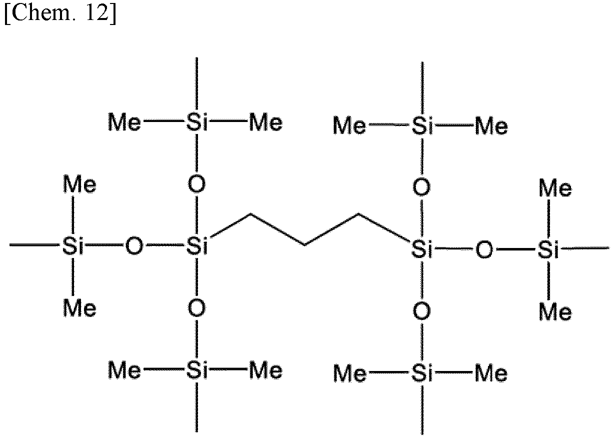 wherein i is a number of 1 to 20, c is a number of 1 to 50, and Me is a methyl group.

In the formula (1), W is a monovalent organic group having an alkenyl group at an end thereof, preferably one represented by any of the following formulae: 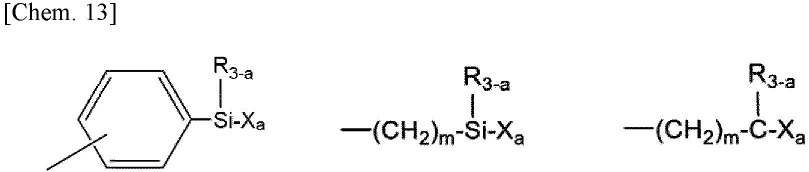 wherein R is a hydrogen atom, a hydroxy group, an alkyl group having 1 to 4 carbon atoms such as a methyl group or an ethyl group, or a phenyl group, X is an alkenyl group, a is a number of 1 to 3, and m is a number of 0 to 10.

Examples of alkenyl groups represented by X include a vinyl group, an allyl group, and a 3-butenyl group.

In the formula (1), examples of structures represented by -ZWβ include the following structures: 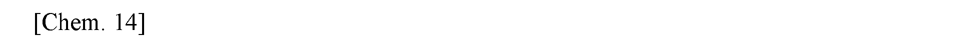 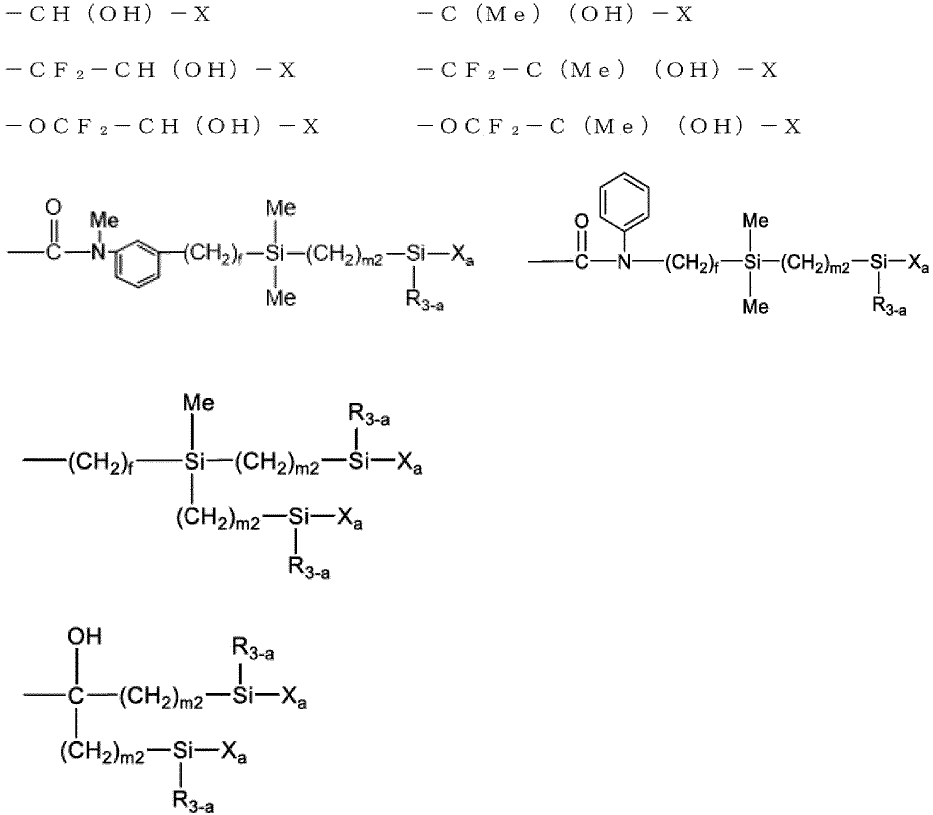 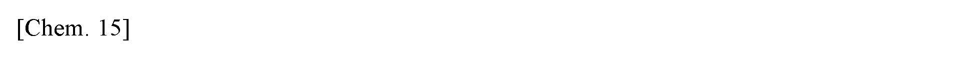 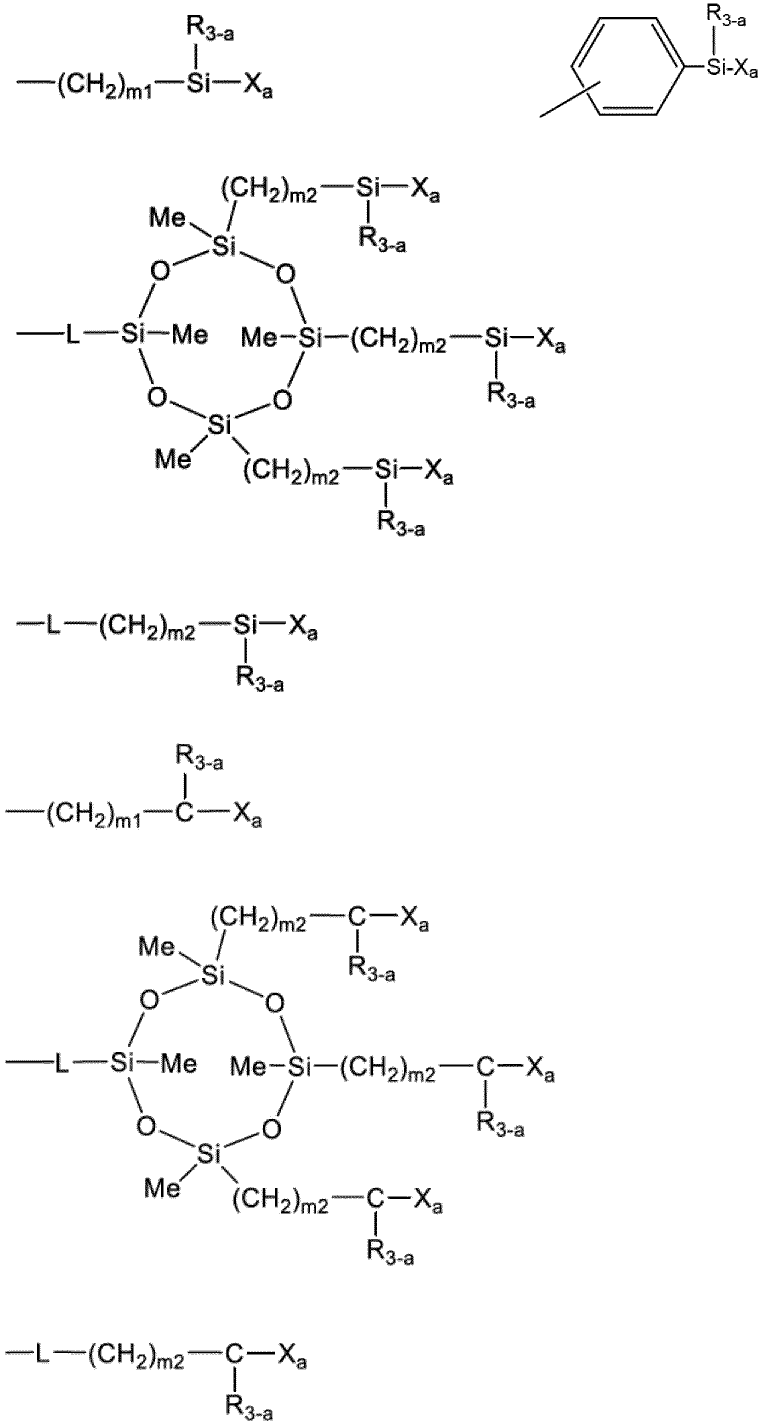 wherein L, R, X, f, and a are each as defined above, m1 is a number of 0 to 10, preferably a number of 2 to 8, m2 is a number of 1 to 10, preferably a number of 2 to 8, and Me is a methyl group.

In the formula (2), Q is a single bond or a divalent organic group and is a group linking the Rf group to the Y group. The divalent organic group of Q is preferably an unsubstituted or substituted divalent organic group that has 2 to 12 carbon atoms and that may contain one or more selected from the group consisting of an amide bond, an ether bond, an ester bond, or a diorganosilylene group such as a dimethylsilylene group, and a group represented by - Si[OH][(CH₂)ᵣSi(CH₃)₃]- (wherein f is a number of 2 to 4), more preferably an unsubstituted or substituted divalent hydrocarbon group that has 2 to 12 carbon atoms and that may contain any of the above structures.

Examples of the unsubstituted or substituted divalent hydrocarbon groups having 2 to 12 carbon atoms include those similar to the unsubstituted or substituted divalent hydrocarbon groups, having 2 to 12 carbon atoms, that are given by way of example for L above.

Examples of divalent organic groups of Q include groups represented by the following structures: 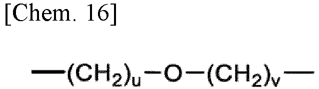 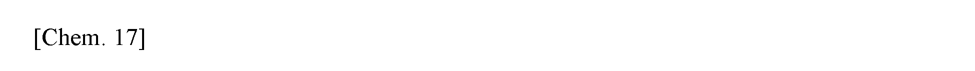 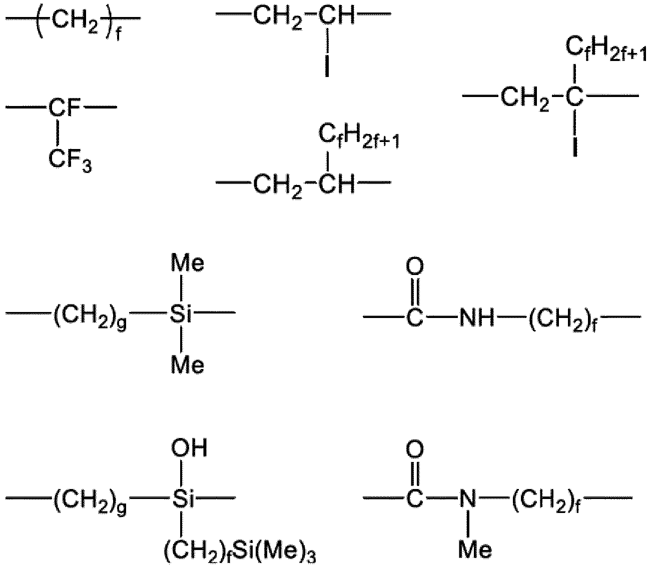 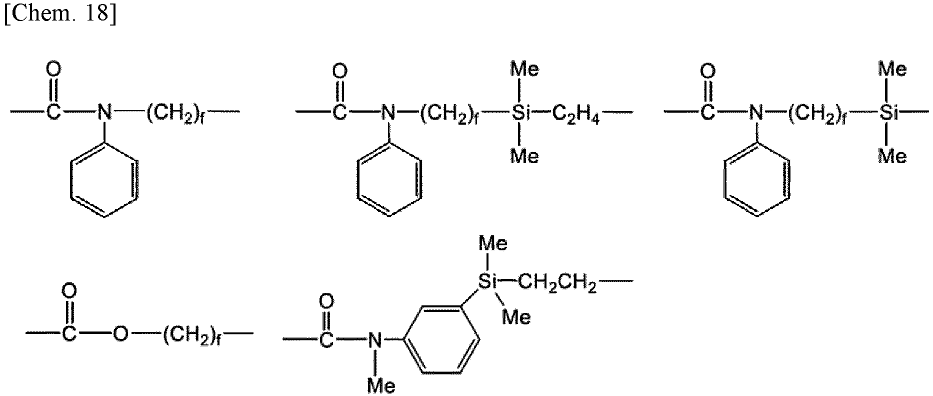 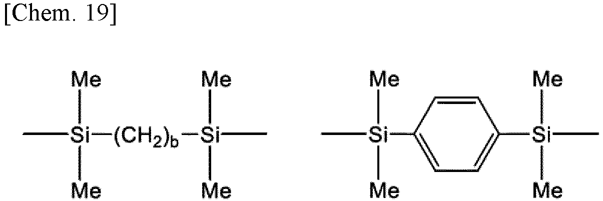 wherein f is a number of 2 to 4, b is a number of 2 to 6, preferably a number of 2 to 4, u and v are each a number of 1 to 4, g is a number of 2 to 4, and Me is a methyl group.

In the formula (2), each Y is independently a divalent organic group having an alkenyl group, preferably a structure represented by any of the following formulae: 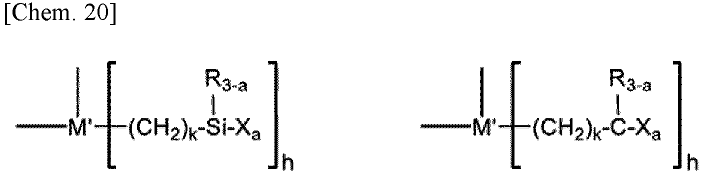
wherein R, X, and a are as defined above, k is a number of 0 to 10, preferably a number of 1 to 10, more preferably a number of 2 to 8, h is a number of 1 to 6, preferably 1 or 2, M' is an unsubstituted or substituted trivalent to octavalent, preferably trivalent or tetravalent, hydrocarbon group in which some or all of the carbon atoms may be replaced by silicon atoms and in which some or all of the hydrogen atoms bonded to the carbon atoms may be replaced by halogen atoms such as fluorine atoms.
M' is preferably a group represented by any of the following structures: 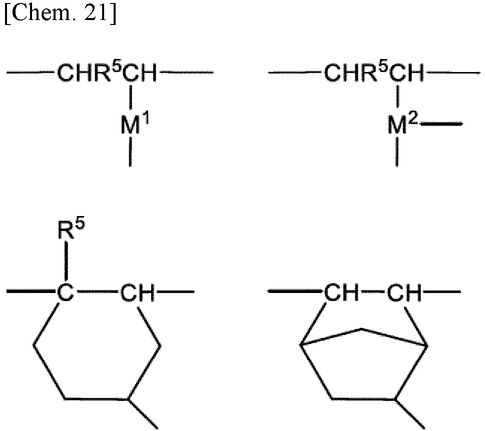
wherein M¹ is a single bond, an unsubstituted or substituted divalent hydrocarbon group having 1 to 6 carbon atoms, or a diorganosilylene group such as a dimethylsilylene group, M² is a trivalent group represented by -R¹C= or a trivalent group represented by -R³Si=, R¹ and R³ are as defined above, and R⁵ is a hydrogen atom or a monovalent hydrocarbon group having 1 to 6 carbon atoms, for example, an alkyl group such as a methyl group, an ethyl group, or a propyl group.

Examples of M¹ include a single bond, a phenylene group, a dimethylsilylene group, and a tetrafluoroethylene group. In addition, examples of M² include the following group: 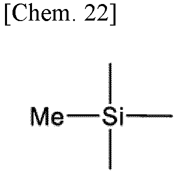 wherein Me is a methyl group.

Examples of such Y include the following groups: 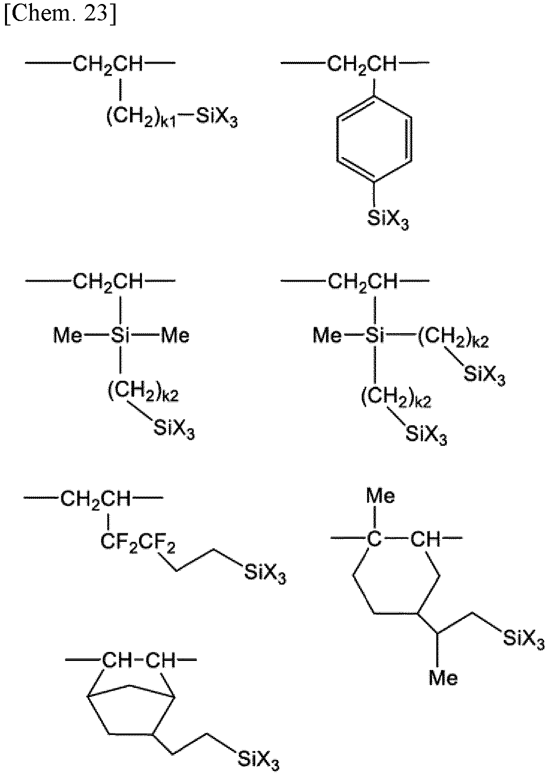 wherein X is as defined above, k1 is a number of 0 to 10, preferably a number of 1 to 8, k2 is a number of 2 to 10, preferably a number of 2 to 8, Me is a methyl group, and some or all of the silicon atoms in the formulae may be replaced by carbon atoms.

In the formula (2), each δ is independently a number of 1 to 10, preferably a number of 1 to 4.

In the formula (2), each B is independently a hydrogen atom, an alkyl group having 1 to 4 carbon atoms such as a methyl group, an ethyl group, a propyl group, or a butyl group, or a halogen atom such as a fluorine atom, a chlorine atom, a bromine atom, or an iodine atom.

Examples of alkenyl group-containing perfluoropolyether compounds represented by the formulae (1) and (2) include the following compounds: 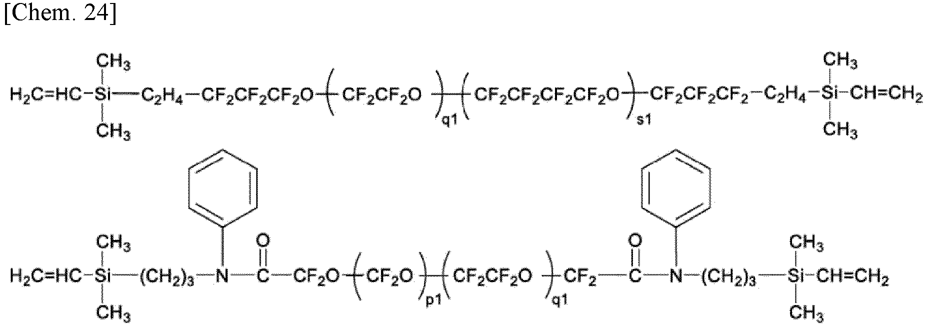 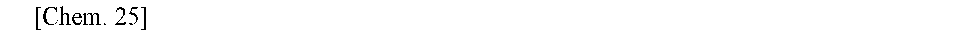 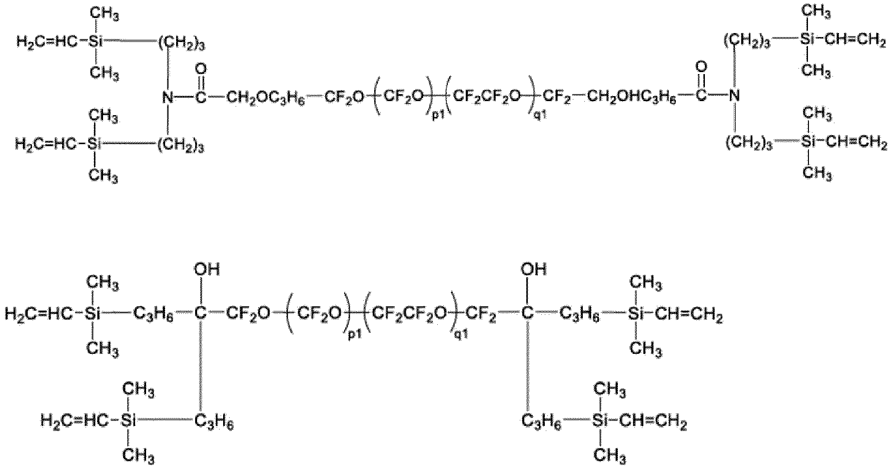 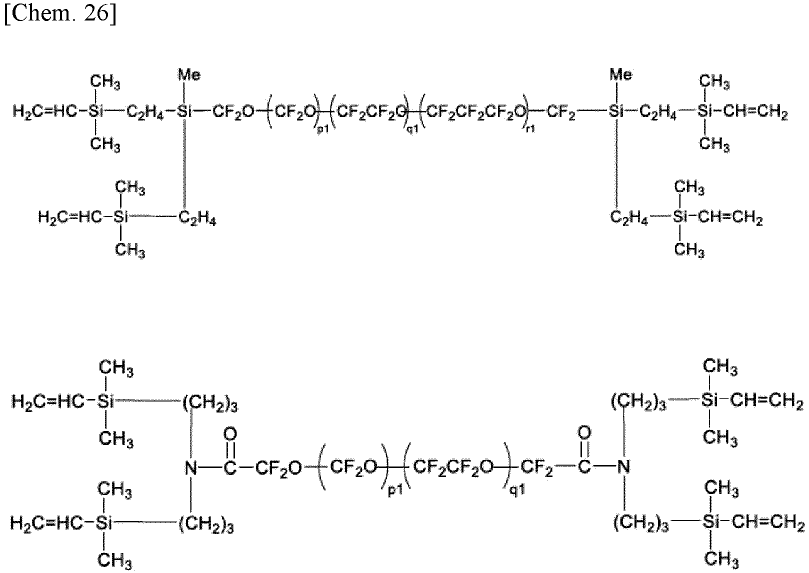 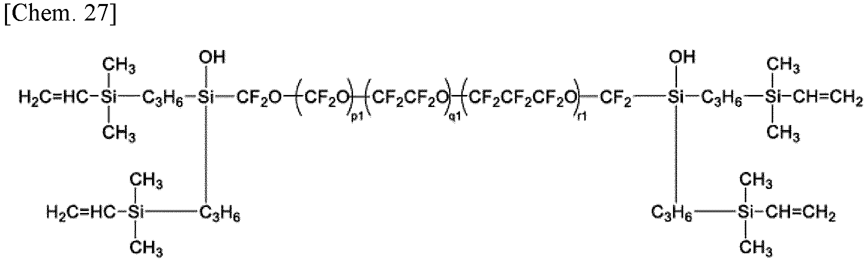 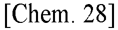 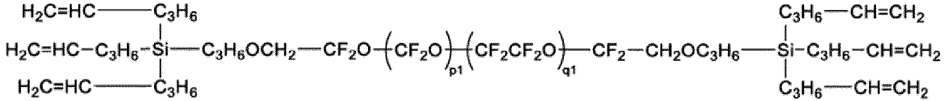 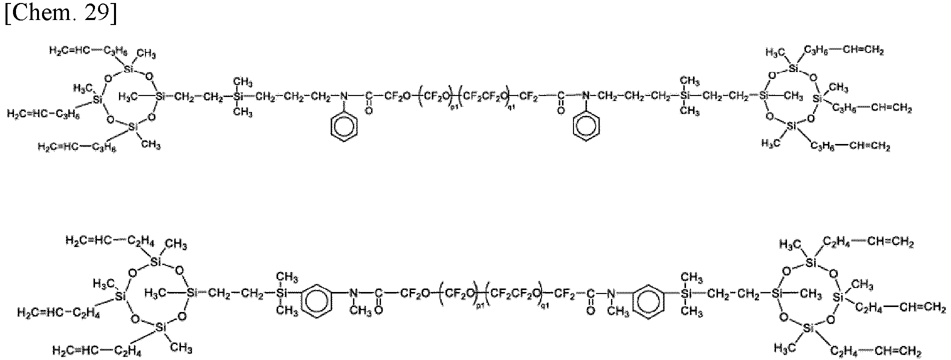 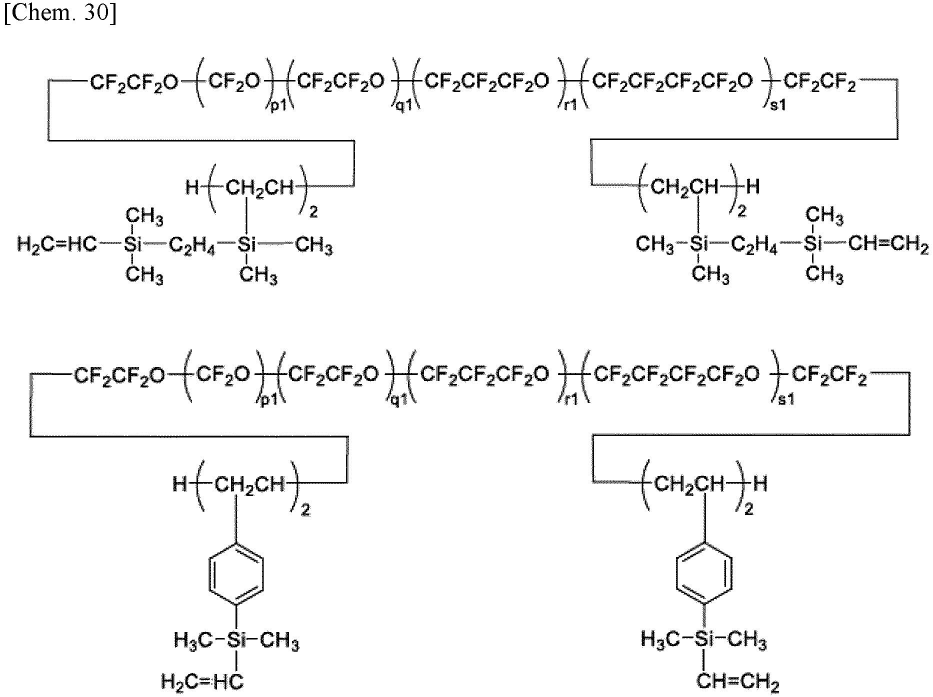
wherein p1, q1, r1, and s1 are each independently an integer of 1 to 200, the sum of p1, q1, r1, and s1 is 3 to 300, and the repeating units in parentheses may be randomly bonded together, 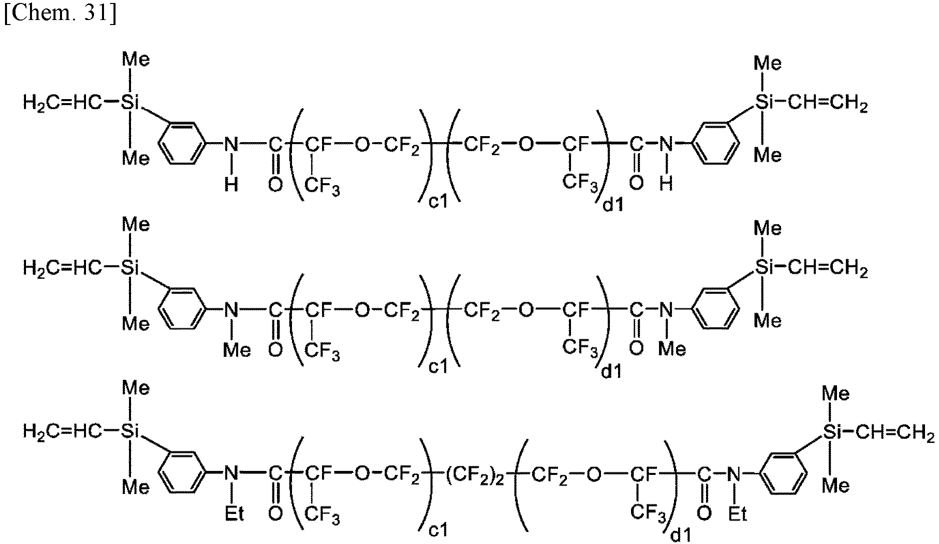 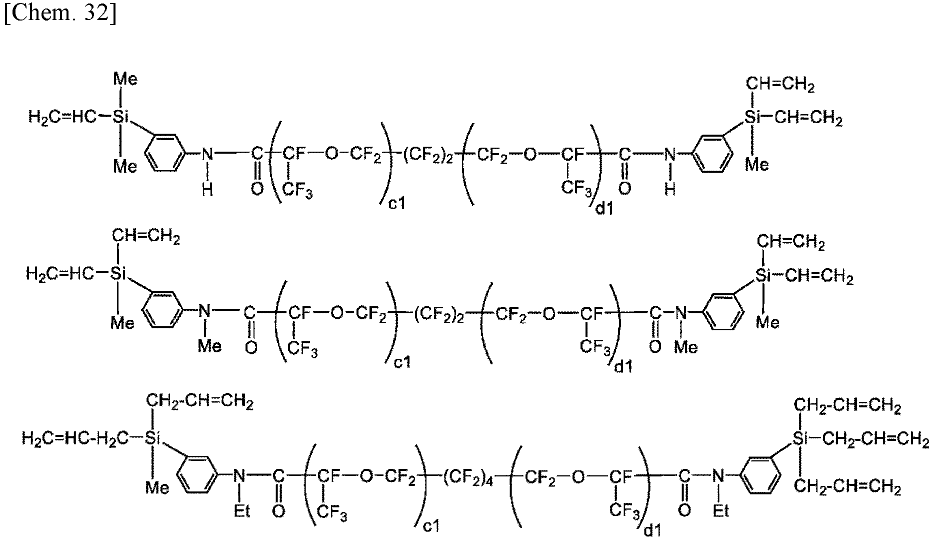 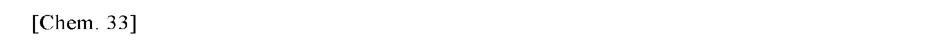 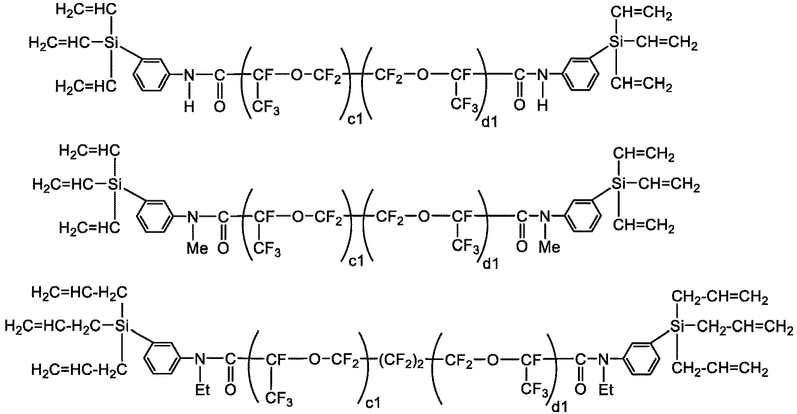
wherein c1 and d1 are each a number of 1 to 150, the sum of c1 and d1 is 2 to 300, and the repeating units in parentheses may be randomly bonded together, 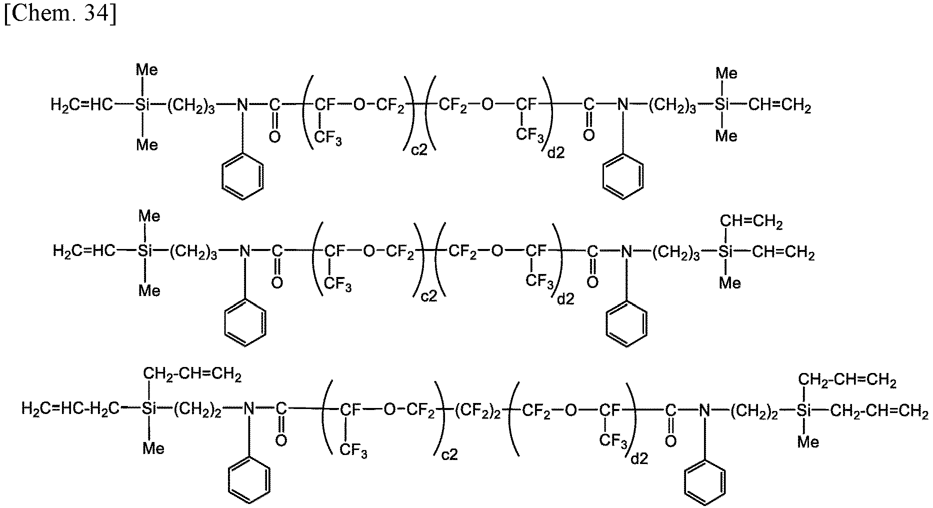 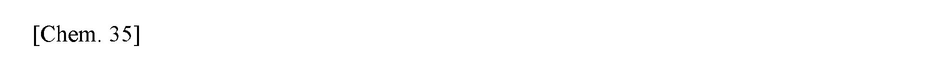 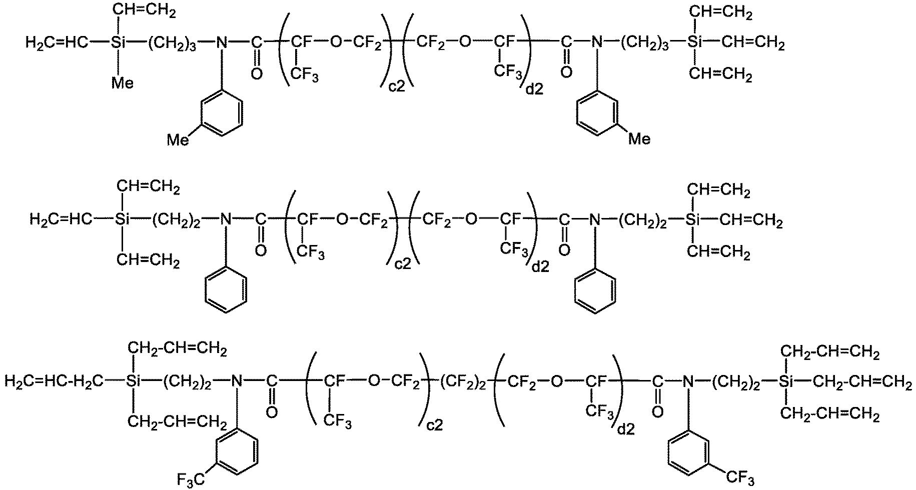
wherein c2 and d2 are each a number of 1 to 150, the sum of c2 and d2 is 2 to 300, and the repeating units in parentheses may be randomly bonded together.

### [Component (B)]

The component (B) is a fluorine-modified organosilicon compound having two or more hydrogen atoms bonded to silicon atoms (hydrosilyl groups represented by SiH) per molecule and serves as a crosslinking agent (curing agent) capable of undergoing a hydrosilylation addition reaction with the component (A) in the perfluoropolyether compound-containing curable composition for the seal member of the present invention. The component (B) is preferably an organosilicon compound (particularly, a fluorine-containing organohydrogenpolysiloxane) that has, per molecule, a monovalent perfluoroalkyl group having two or more carbon atoms (i.e., five or more fluorine atoms) or a monovalent perfluorooxyalkyl group having one or more carbon atoms (i.e., three or more fluorine atoms), or a divalent perfluoroalkylene group having two or more carbon atoms (i.e., four or more fluorine atoms) or a divalent perfluorooxyalkylene group having two or more carbon atom (i.e., four or more fluorine atoms), that has two or more hydrogen atoms directly bonded to silicon atoms (SiH groups) per molecule, and that have no epoxy groups or alkoxy groups directly bonded to silicon atoms per molecule.

The monovalent perfluoroalkyl group, the monovalent perfluorooxyalkyl group, the divalent perfluoroalkylene group, and the divalent perfluorooxyalkylene group are groups introduced from the viewpoint of, for example, compatibility with the component (A), dispersibility, and uniformity after curing.

Examples of these monovalent perfluoroalkyl groups and monovalent perfluorooxyalkyl groups include groups represented by the following general formulae (4) and (5):

C_{f}F_{2f+1}- (4)

wherein f is a number of 2 to 10, preferably a number of 3 to 7, and 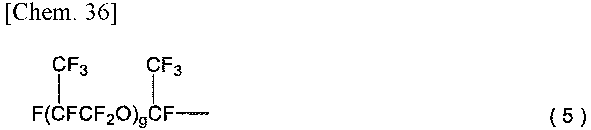
wherein g is a number of 1 to 50, preferably a number of 2 to 30.

In addition, examples of such divalent perfluoroalkylene groups and divalent perfluorooxyalkylene groups include groups represented by the following general formulae (6) to (8):

-CₕF₂ₕ- (6)

wherein h is a number of 2 to 20, preferably a number of 2 to 10, 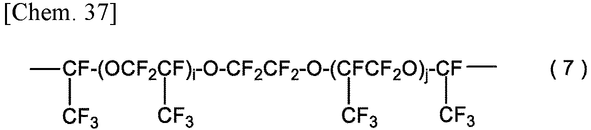
wherein i and j are each a number of 1 or more, preferably a number of 1 to 100, and the average of i + j is 2 to 200, preferably 2 to 100, and

   -CF₂O-(CF₂CF₂O)ₖ(CF₂O)ₗ-CF₂- (8)
wherein k and l are each a number of 1 to 50, preferably a number of 1 to 30, the average of k + l is 2 to 100, preferably 2 to 60, and the repeating units may be randomly bonded together.

In addition, the perfluoroalkyl group, the perfluorooxyalkyl group, the perfluoroalkylene group, or the perfluorooxyalkylene group (which are hereinafter also collectively referred to as "monovalent or divalent fluorine-containing organic group") is preferably linked to a silicon atom forming the polysiloxane by a divalent linking group. The divalent linking group is preferably an unsubstituted or substituted divalent hydrocarbon group that has 2 to 13 carbon atoms, particularly 2 to 8 carbon atoms, and that may have an oxygen atom, a nitrogen atom, or a silicon atom. Specifically, the divalent linking group may be, for example, an alkylene group, an arylene group, a combination thereof, or any of these groups that is interrupted by, for example, one or more structures selected from the group consisting of an ether bond oxygen atom, an amide bond, a carbonyl bond, an ester bond, and a diorganosilylene group such as a dimethylsilylene group, and examples thereof include the following groups having 2 to 13 carbon atoms:

-CH₂CH₂-

-CH₂CH₂CH₂-

-CH₂CH₂CH₂OCH₂-

-CH₂CH₂CH₂-NH-CO-

-CH₂CH₂CH₂-N(Ph)-CO-

-CH₂CH₂CH₂-N(CH₃)-CO-

-CH₂CH₂CH₂-N(CH₂CH₃)-CO-

-CH₂CH₂CH₂-N(CH(CH₃)₂)-CO-

-CH₂CH₂CH₂-O-CO-

-CH₂CH₂-Si(CH₃)₂-Ph'-N(CH₃)-CO-

-CH₂CH₂CH₂-Si(CH₃)₂-Ph'-N(CH₃)-CO-

wherein Ph is a phenyl group, and Ph' is a phenylene group.

In addition, a monovalent substituent bonded to a silicon atom other than the monovalent or divalent fluorine-containing organic group and a hydrogen atom directly bonded to a silicon atom in the fluorine-modified organosilicon compound as the component (B) may be an unsubstituted or substituted alkyl or aryl group having 1 to 20 carbon atoms, preferably 1 to 12 carbon atoms, and examples thereof include alkyl groups such as a methyl group, an ethyl group, a propyl group, a butyl group, a hexyl group, a cyclohexyl group, an octyl group, and a decyl group; aryl groups such as a phenyl group, a tolyl group, and a naphthyl group; and those in which some or all of the hydrogen atoms are replaced by halogen atoms such as chlorine atoms, cyano groups, or the like, for example, a chloromethyl group, a chloropropyl group, and a cyanoethyl group. Of these, a methyl group is preferred. It is noted that the component (B) has no epoxy groups or alkoxy groups.

The fluorine-modified organosilicon compound as the component (B) may have a cyclic structure, a chain structure, a three-dimensional network structure, or a combination thereof. Although the number of silicon atoms in the fluorine-modified organosilicon compound is not particularly limited, it is typically 2 to 60, preferably 3 to 30, more preferably 4 to 30.

In addition, the component (B) has two or more SiH groups, preferably three or more SiH groups, per molecule and preferably has a SiH group content of 0.0001 to 0.02 mol/g, more preferably 0.0002 to 0.01 mol/g.

Examples of such components (B) include those represented by the following general formulae (9) to (15): 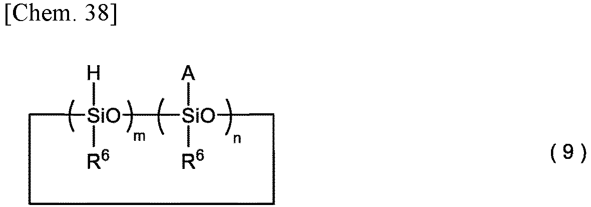
wherein, in the formula (9), each A is independently a monovalent perfluoroalkyl group or monovalent perfluorooxyalkyl group bonded to a silicon atom forming the polysiloxane via a divalent hydrocarbon group that may have an oxygen atom, a nitrogen atom, or a silicon atom, examples of monovalent perfluoroalkyl groups and monovalent perfluorooxyalkyl groups including those represented by the general formulae (4) and (5), each R⁶ is independently an unsubstituted or substituted alkyl or aryl group having 1 to 20 carbon atoms, preferably 1 to 12 carbon atoms, m is a number of 2 to 6, preferably a number of 3 to 6, n is a number of 1 to 4, preferably a number of 1 to 3, and m + n is a number of 4 to 10, preferably a number of 4 to 9, provided that the order in which -(Si(H)(R⁶)O)- and - (Si(A)(R⁶)O)- are bonded together is not limited, 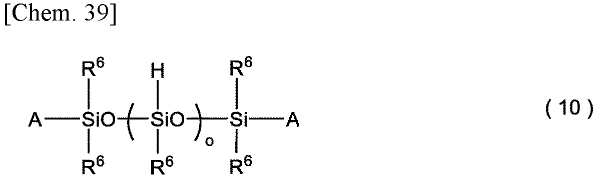
wherein, in the formula (10), each A is independently as defined for A above, each R⁶ is independently as defined for R⁶ above, and o is a number of 2 to 50, preferably a number of 3 to 30, 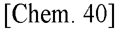 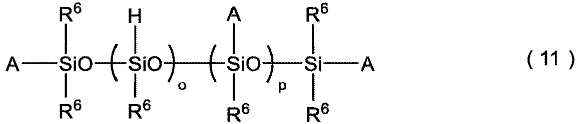
wherein, in the formula (11), each A is independently as defined for A above, each R⁶ is independently as defined for R⁶ above, o is a number of 2 to 50, preferably a number of 3 to 30, p is a number of 1 to 40, preferably a number of 1 to 20, and o + p is a number of 4 to 60, preferably a number of 4 to 50, provided that the order in which -(Si(H)(R⁶)O)- and - (Si(A)(R⁶)O)- are bonded together is not limited, 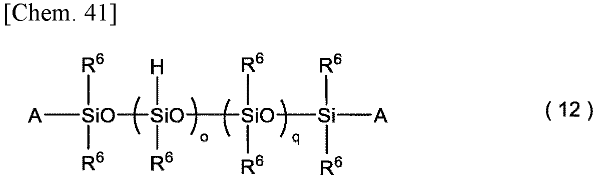
wherein, in the formula (12), each A is independently as defined for A above, each R⁶ is independently as defined for R⁶ above, o is a number of 2 to 50, preferably a number of 3 to 30, q is a number of 1 to 40, preferably a number of 1 to 20, and o + q is a number of 4 to 60, preferably a number of 4 to 50, provided that the order in which -(Si(H)(R⁶)O)- and -(Si(R⁶)₂O)-are bonded together is not limited, 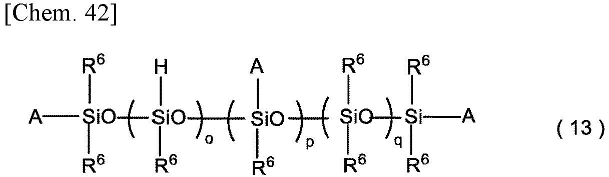
wherein, in the formula (13), each A is independently as defined for A above, each R⁶ is independently as defined for R⁶ above, o is a number of 2 to 50, preferably a number of 3 to 30, p is a number of 1 to 40, preferably a number of 1 to 20, q is a number of 1 to 40, preferably a number of 1 to 20, and o + p + q is a number of 5 to 60, preferably a number of 5 to 50, provided that the order in which -(Si(H)(R⁶)O)-, -(Si(A)(R⁶)O)-, and -(Si(R⁶)₂O)- are bonded together is not limited, 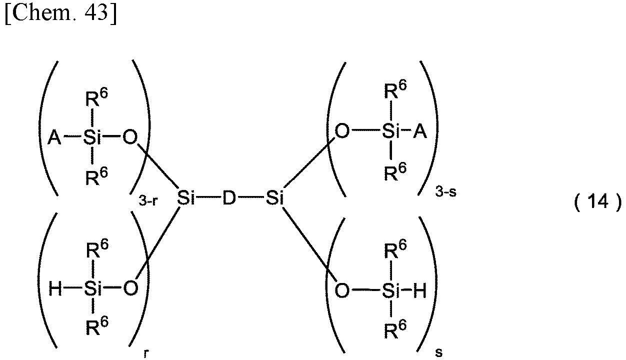
wherein, in the formula (14), D is a divalent perfluoroalkylene group or divalent perfluorooxyalkylene group bonded to each adjacent silicon atom via an oxygen atom, an alkylene group, or a divalent hydrocarbon group that may have an oxygen atom or a nitrogen atom, examples of divalent perfluoroalkylene groups and divalent perfluorooxyalkylene groups including those represented by the general formulae (6) to (8), each A is independently as defined for A above, each R⁶ is independently as defined for R⁶ above, r is a number of 0 to 3, s is a number of 0 to 3, and r + s is a number of 2 to 6, preferably a number of 3 to 5, and 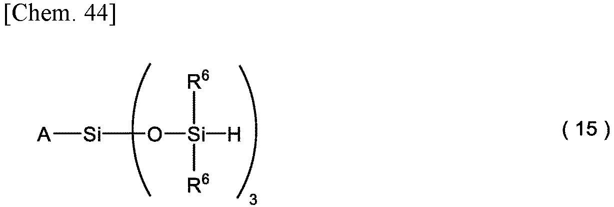
wherein, in the formula (15), A is as defined for A above, and each R⁶ is independently as defined for R⁶ above.

Specific examples of components (B) include the following compounds. These compounds may be used alone or in a combination of two or more thereof. In the following formulae, Me represents a methyl group, Ph represents a phenyl group, f' is a number of 2 to 10, g' is a number of 1 to 50, h' is a number of 1 to 20, i' and j' are each a number of 1 to 100, i' + j' is a number of 2 to 200, k' and l' are each a number of 1 to 50, and k' + l' is a number of 2 to 100.

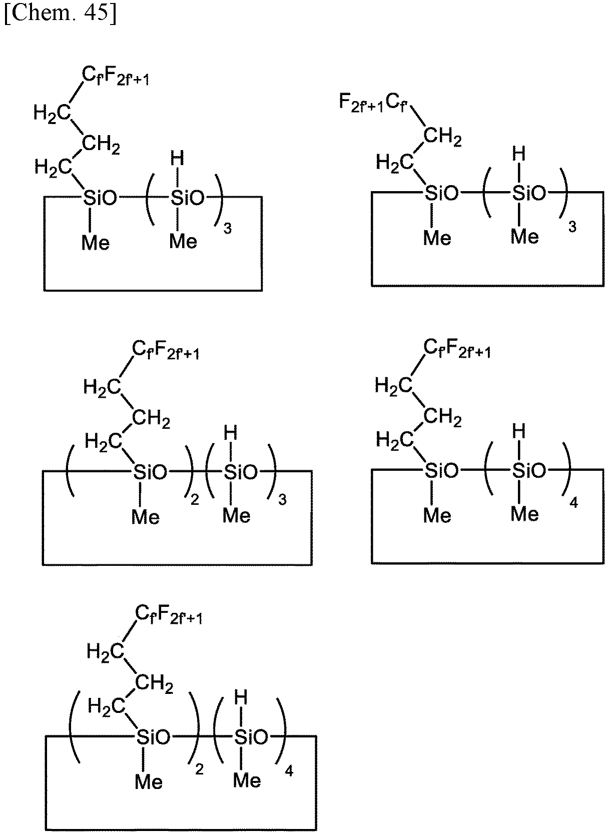

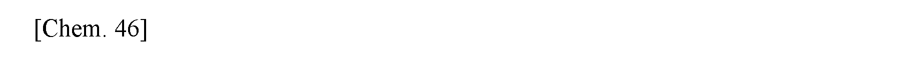

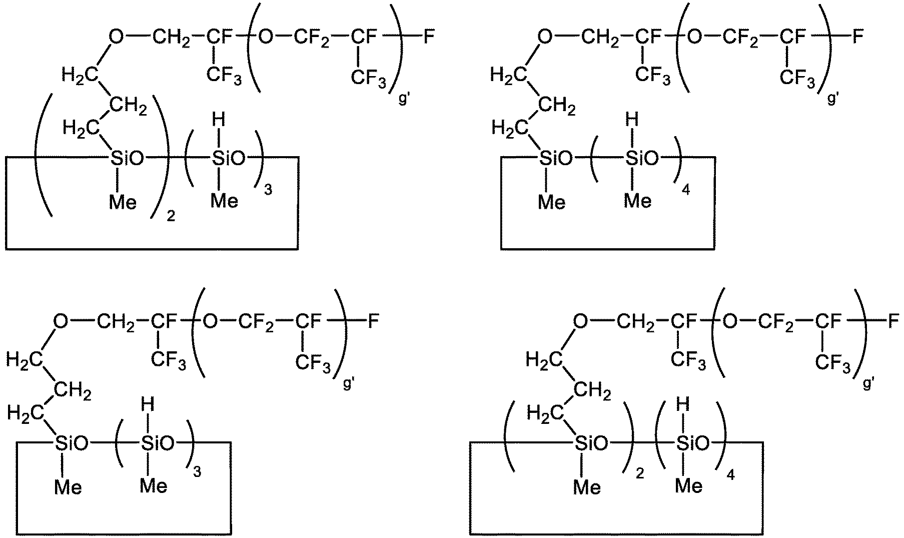

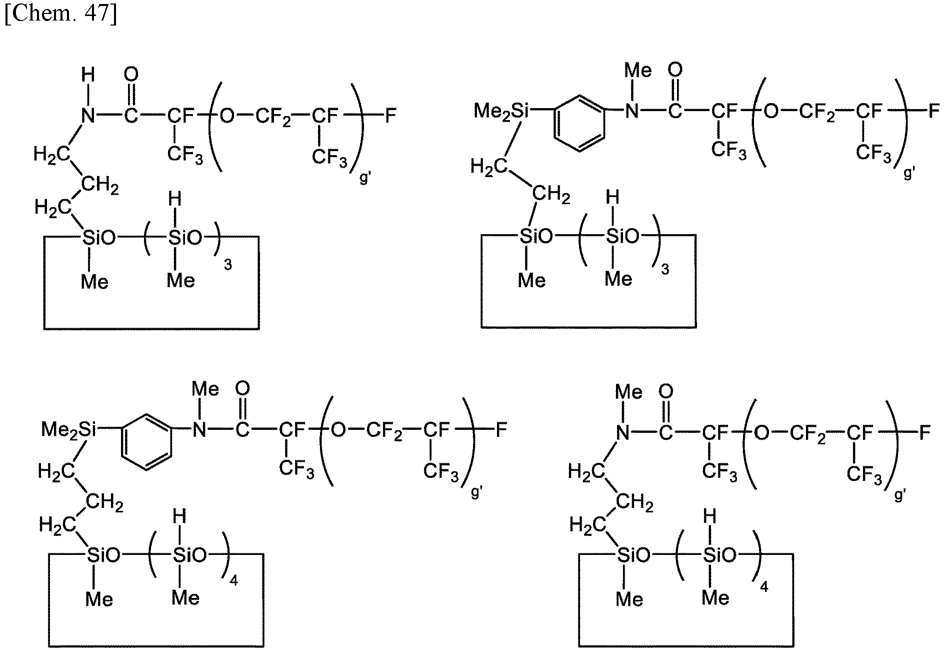

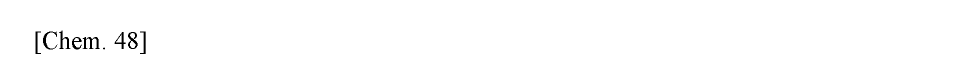

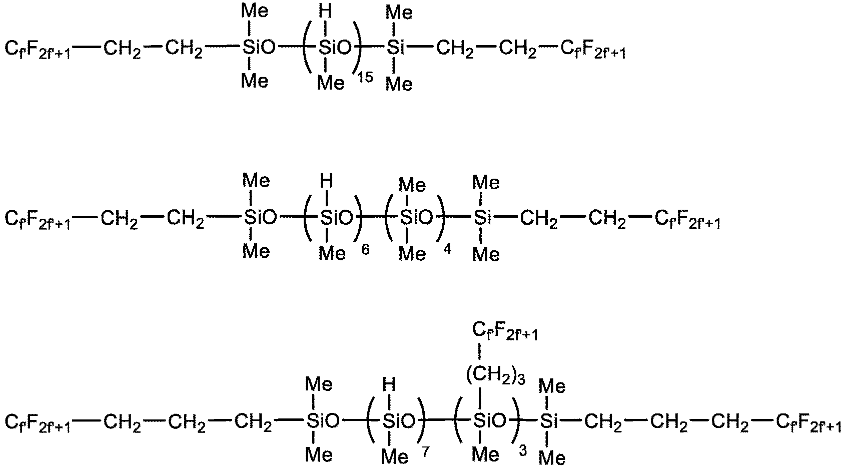

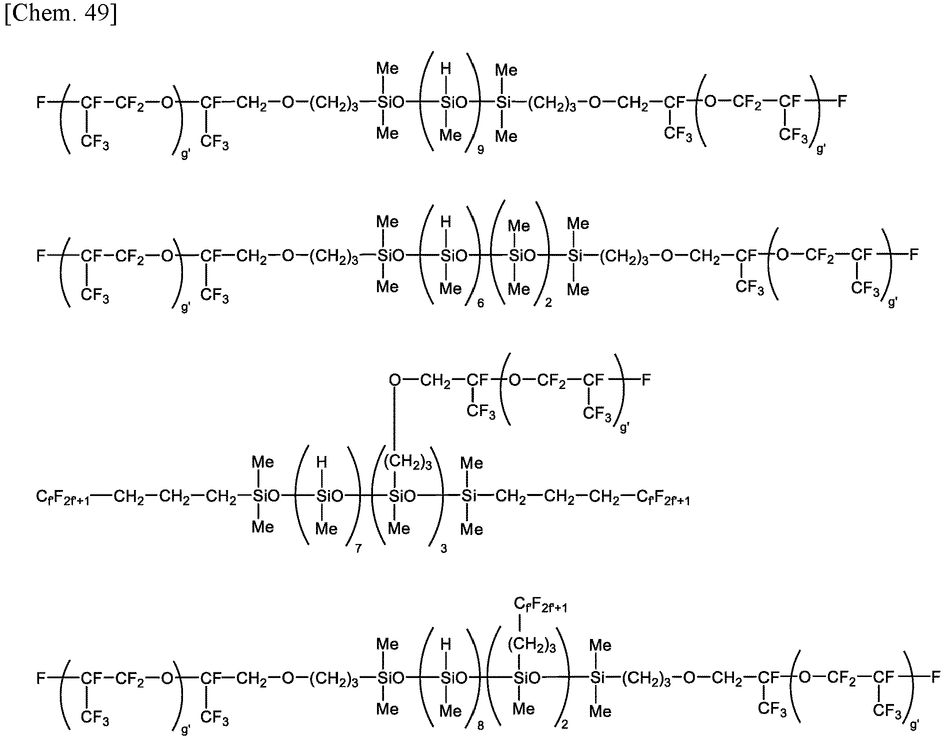

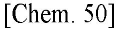

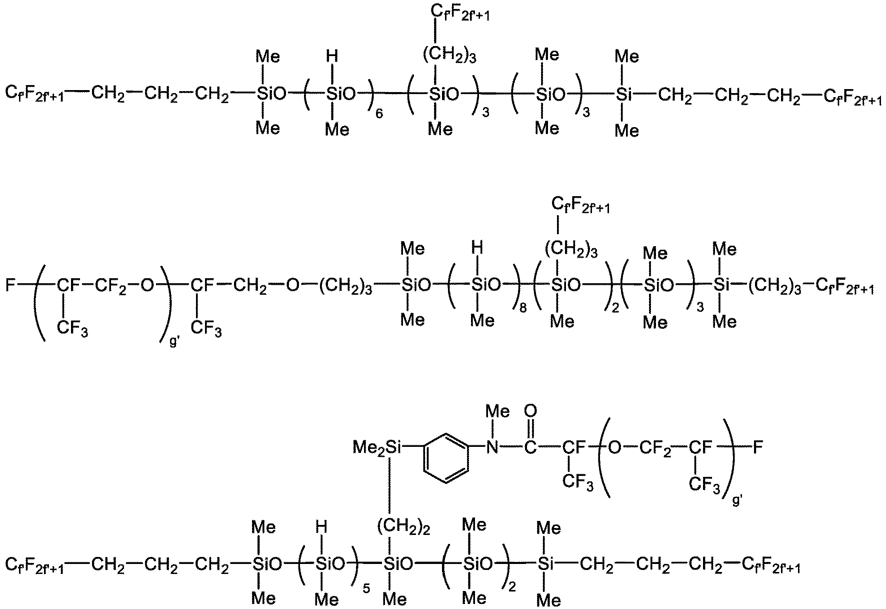

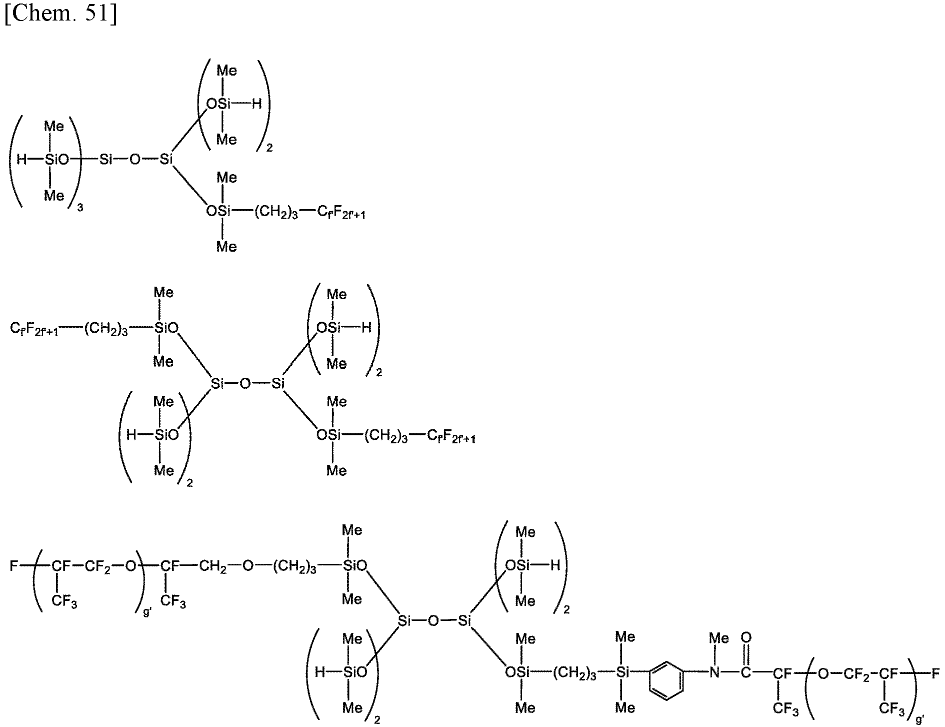

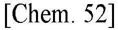

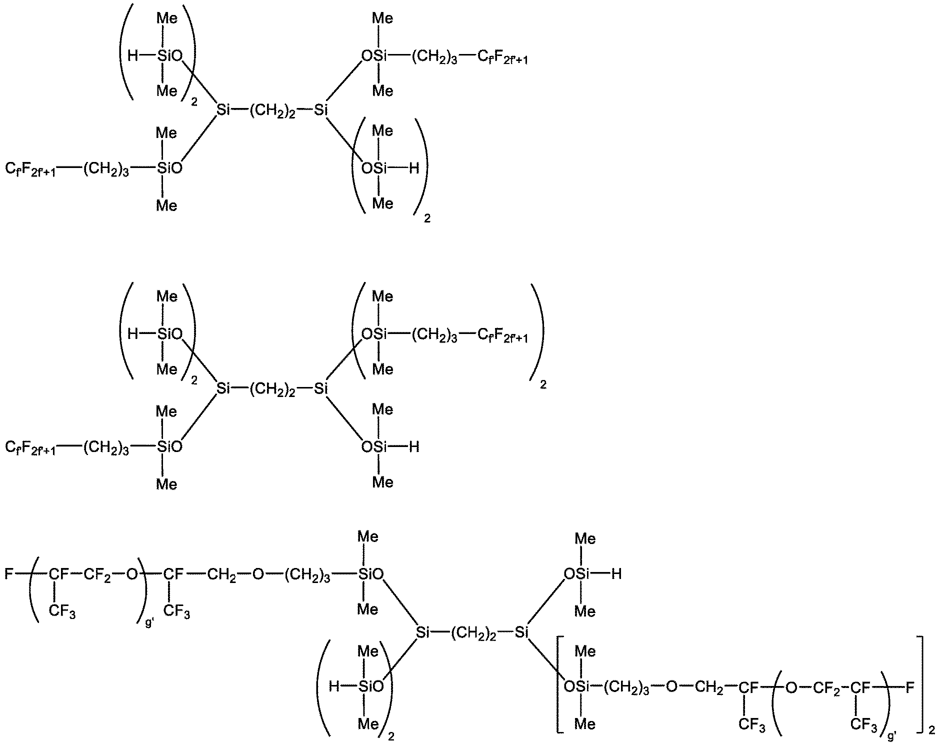

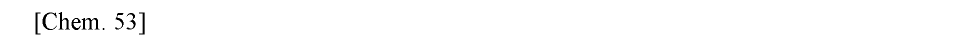

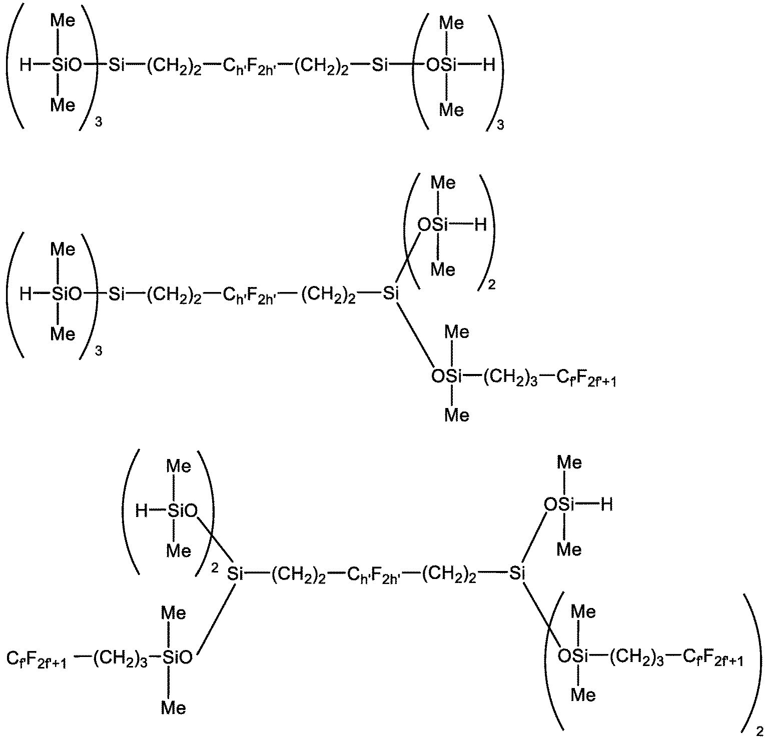

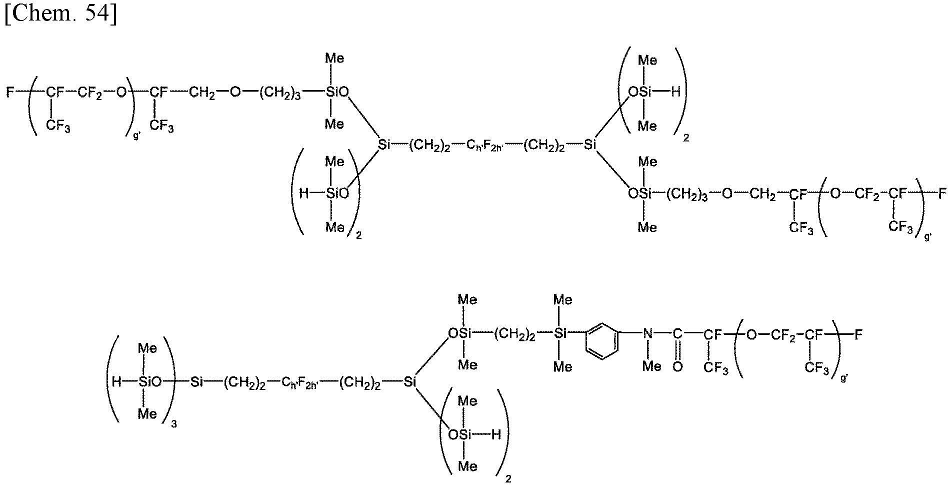

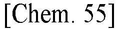

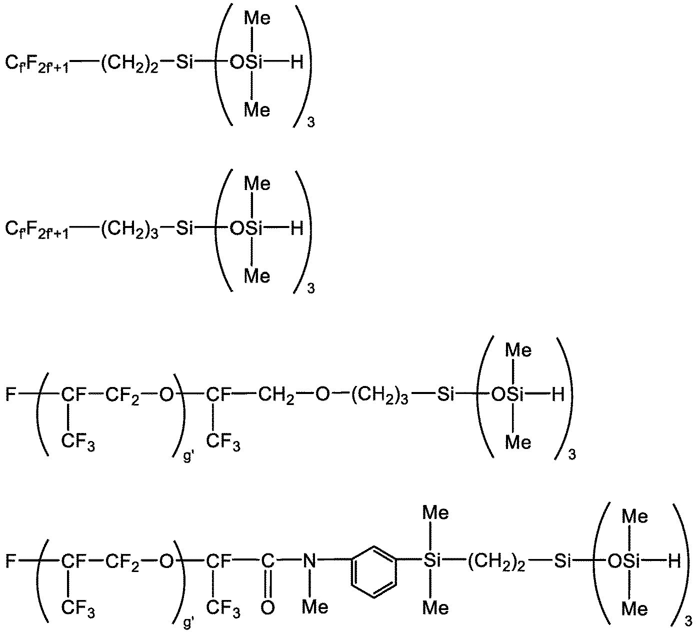

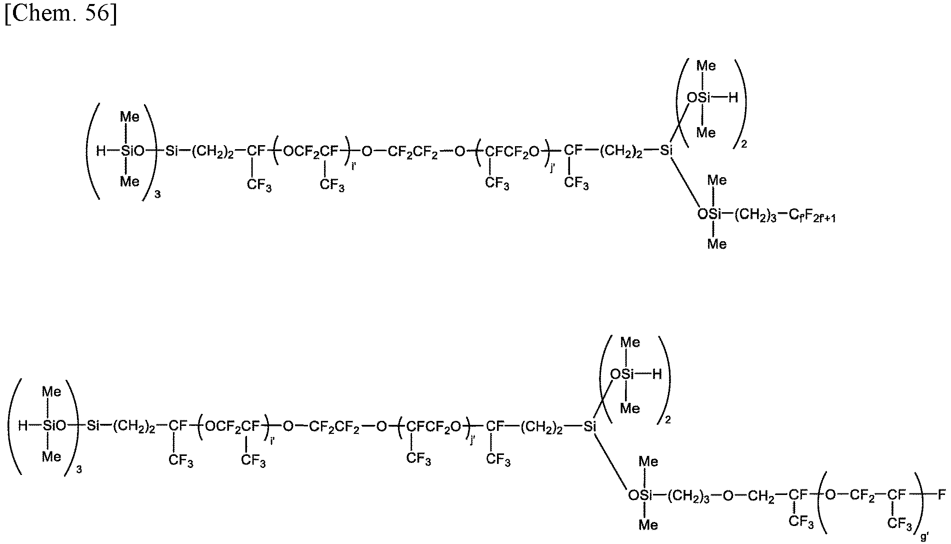

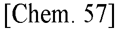

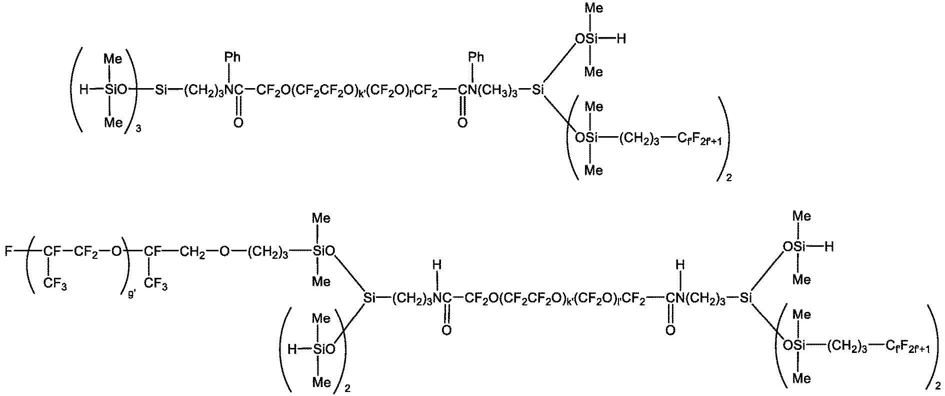

These components (B) may be used alone or in a combination of two or more thereof. In addition, the amount (molar ratio) of the component (B) added is preferably such that the amount of hydrogen atoms bonded to silicon atoms (SiH groups) in the component (B) is 0.5 to 3 mol, more preferably 0.6 to 2 mol, per mole of alkenyl groups (particularly alkenyl groups in the component (A)) contained in the composition of the present invention. When the amount of SiH groups is less than 0.5 mol, the cured product may exhibit an insufficient degree of crosslinking. On the other hand, when the amount of SiH groups is more than 3 mol, the composition may exhibit decreased storage stability, and the cured product obtained after curing may exhibit decreased heat resistance.

### [Component (C)]

The hydrosilylation reaction catalyst as the component (C) is a catalyst that promotes the addition reaction between the component (A) and the component (B). This hydrosilylation reaction catalyst is typically a noble metal (particularly a platinum group metal) or a compound thereof and is expensive; therefore, a platinum or a platinum compound, which is relatively easily available, is often used.

Examples of platinum compounds include chloroplatinic acid; complexes of chloroplatinic acid with olefins such as ethylene; complexes of chloroplatinic acid with alcohols or vinylsiloxanes; and metallic platinum supported on silica, alumina, carbon, or the like. As hydrosilylation reaction catalysts other than platinum and compounds thereof, rhodium-, ruthenium-, iridium-, and palladium-based compounds are also known, and examples thereof include RhCl(PPh₃)₃, RhCl(CO)(PPh₃)₂, Ru₃(CO)₁₂, IrCl(CO)(PPh₃)₂, and Pd(PPh₃)₄. In these formulae, Ph is a phenyl group.

When these catalysts are solid catalysts, they can be used in solid form. However, to obtain a more uniform cured product, it is preferred to use, for example, a solution of chloroplatinic acid or a complex thereof in a suitable solvent such as toluene or ethanol by dissolving the solution and the component (A) in each other.

These components (C) may be used alone or in a combination of two or more thereof.

The amount of catalyst used is not particularly limited, and the desired curing rate can be achieved with a catalytic amount. However, from an economical viewpoint or to obtain a good cured product, the amount of catalyst used is typically 0.1 to 2,000 ppm, preferably 0.1 to 500 ppm, particularly preferably 0.5 to 200 ppm (in terms of mass of platinum group metal atoms), with respect to the mass of the component (A), and can be increased or decreased as appropriate depending on the desired curing rate.

The conditions for the addition reaction (hydrosilylation reaction) can be selected as appropriate. Although the reaction may be performed at room temperature, heating can be performed to 50°C to 200°C to promote the reaction.

### [Component (D)]

The component (D) is a reinforcing filler. Examples of reinforcing fillers include silica-based reinforcing fillers and reinforcing or semi-reinforcing fillers such as quartz powder, fused quartz powder, diatomaceous earth, and calcium carbonate. Examples of silica-based reinforcing fillers include silica powders such as fumed silica (fumed silica or dry silica), precipitated silica (wet silica), spherical silica (fused silica), sol-gel method silica, and silica aerogel and silica powders (surface-treated silica powders) obtained by treating the surface of the silica powders with various organochlorosilanes, organodisilazanes, cyclic organopolysilazanes, or the like. Further examples of silica-based reinforcing fillers include silica powders obtained by further treating the surface-treated silica powders with an organosilane or organosiloxane having a monovalent perfluoroalkyl group represented by the general formula (4) or a monovalent perfluorooxyalkyl group represented by the general formula (5).

Of these, it is particularly preferred that the component (D) be fumed silica from the viewpoint of improving the mechanical strength and improving the dispersion stability of the composition, and it is further preferred that the component (D) be fumed silica treated with a silicon compound-based surface treatment agent such as a silane from the viewpoint of improving the dispersibility, particularly preferably fumed silica subjected to hydrophobic treatment with a silicon compound having a hydrolyzable group, for example, an organochlorosilane such as dimethyldichlorosilane or trimethylchlorosilane, a silazane compound such as hexamethyldisilazane, or a cyclic silazane such as hexamethylcyclotrisilazane.

The silica powder having the silica surface thereof treated with the surface treatment agent in the hydrophobic treatment is preferably a silica powder directly treated in powder form in advance. Typically, as the treatment method, a commonly known technique can be used. For example, the surface-treated silica powder can be prepared by placing the untreated silica powder and the treatment agent in a mechanical mixing device sealed under normal pressure or in a fluidized bed, mixing them together at room temperature or with heat treatment, if necessary in the presence of an inert gas and optionally using a catalyst and water for promoting hydrolysis, and drying the mixture after mixing. The amount of surface treatment agent added may be at least the amount calculated from the area over which the surface treatment agent can cover the surface of the silica powder.

In addition, it is preferred that the specific surface area of the silica powder as measured by the BET method be 50 m²/g or more to improve the mechanical properties and be 300 m²/g or less since it may otherwise be difficult to add the reinforcing filler because the viscosity increases considerably when the silica powder is added to the composition.

These components (D) may be used alone or in a combination of two or more thereof.

Furthermore, the reinforcing filler preferably has a bulk density of 30 to 80 g/L. When the reinforcing filler has a bulk density of less than 30 g/L, it may be difficult to add the reinforcing filler because the viscosity of the composition increases. When the reinforcing filler has a bulk density of more than 80 g/L, the reinforcing filler may provide an insufficient reinforcing effect.

The amount of reinforcing filler added is preferably 10 to 40 parts by mass, more preferably 15 to 30 parts by mass, relative to 100 parts by mass of the component (A). When the amount of reinforcing filler added is less than 10 parts by mass, the cured product may exhibit insufficient mechanical strength. On the other hand, when the amount of reinforcing filler added is more than 40 parts by mass, it may be difficult to add the reinforcing filler because the viscosity of the composition increases considerably.

### [Component (E)]

The component (E) is a hydrosilylation reaction control agent and is an optional component that is added if necessary. Examples of hydrosilylation addition reaction control agents include acetylenic alcohols such as 1-ethynyl-1-cyclohexanol, 3-methyl-1-butyn-3-ol, 3,5-dimethyl-1-hexyn-3-ol, 3-methyl-1-pentyn-3-ol, and phenylbutynol; reaction products of acetylenic alcohols with chlorosilanes having a monovalent perfluoroalkyl group represented by the general formula (4) or a monovalent perfluorooxyalkyl group represented by the general formula (5); acetylene compounds such as 3-methyl-3-penten-1-yne, 3,5-dimethyl-3-hexen-1-yne, and triallyl isocyanurate; polyvinylsiloxanes; and organophosphorus compounds. The addition of these compounds allows proper curing reactivity and storage stability to be maintained. These components (E) may be used alone or in a combination of two or more thereof. The component (E), when added, may be added in any amount that does not interfere with the object of the present invention.

### [Component (F)]

The component (F) is an optional component that is added if necessary and serves as an adhesion-imparting agent that imparts self-adhesion to a cured product obtained by curing the perfluoropolyether compound-containing curable composition for the seal member of the present invention. The component (F) is an organopolysiloxane having, per molecule, a hydrogen atom directly bonded to a silicon atom, a monovalent perfluoroalkyl group or a monovalent perfluorooxyalkyl group, and an epoxy group or a trialkoxysilyl group, or both, bonded to a silicon atom via a divalent hydrocarbon group that may contain an oxygen atom.

The monovalent perfluoroalkyl group and the monovalent perfluorooxyalkyl group are groups introduced from the viewpoint of, for example, compatibility with the component (A), dispersibility, and uniformity after curing.

Examples of the monovalent perfluoroalkyl groups and the monovalent perfluorooxyalkyl groups include those represented by the general formulae (4) and (5) described above.

In addition, the monovalent perfluoroalkyl group or the monovalent perfluorooxyalkyl group is preferably linked to a silicon atom forming the polysiloxane via a divalent hydrocarbon group (linking group) that may contain a silicon atom, an oxygen atom, or a nitrogen atom. The divalent hydrocarbon group may be an alkylene group, an arylene group, a combination thereof, or any of these groups that is interrupted by, for example, one or more structures selected from the group consisting of an ether bond oxygen atom, an amide bond, a carbonyl bond, an ester bond, and a diorganosilylene group such as a dimethylsilylene group, and examples thereof include those having 2 to 20 carbon atoms, such as:

-CH₂CH₂-

-CH₂CH₂CH₂-

-CH₂CH₂CH₂OCH₂-

-CH₂CH₂CH₂-NH-CO-

-CH₂CH₂CH₂-N(Ph)-CO-

-CH₂CH₂CH₂-N(CH₃)-CO-

-CH₂CH₂CH₂-N(CH₂CH₃)-CO-

-CH₂CH₂CH₂-N(CH(CH₃)₂)-CO-

-CH₂CH₂CH₂-O-CO-

-CH₂CH₂CH₂-Si(CH₃)₂-O-Si(CH₃)₂-CH₂CH₂CH₂-

-CH₂OCH₂CH₂CH₂-Si(CH₃)₂-O-Si(CH₃)₂-CH₂CH₂-

-CO-N(CH₃)-Ph'-Si(CH₃)₂-CH₂CH₂-

-CO-N(CH₃)-Ph'-Si(CH₃)₂-CH₂CH₂-Si(CH₃)₂-O-Si(CH₃)₂-CH₂CH₂-

-CO-NH-Ph'-[Si(CH₃)₂-CH₂CH₂]₃-CH₂-

-CO-N(CH₃)-Ph'-[Si(CH₃)₂-CH₂CH₂]₃-

wherein Ph is a phenyl group, and Ph' is a phenylene group.

The organopolysiloxane as the component (F) is preferably a cyclic organopolysiloxane represented by the following general formula (16): 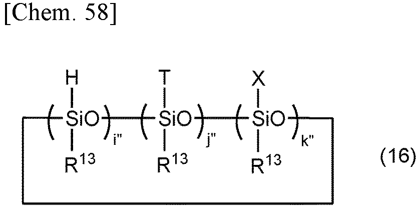 (wherein i" is a number of 1 to 6, preferably a number of 1 to 5, j" is a number of 1 to 4, preferably a number of 1 to 3, k" is a number of 1 to 4, preferably a number of 1 to 3, i" + j" + k" is a number of 4 to 10, preferably a number of 4 to 8, each R¹³ is independently an unsubstituted or substituted monovalent hydrocarbon group, each T is independently a monovalent perfluoroalkyl group or monovalent perfluorooxyalkyl group bonded to a silicon atom via a divalent hydrocarbon group that may contain a silicon atom, an oxygen atom, or a nitrogen atom, and each X is independently an epoxy group or trialkoxysilyl group bonded to a silicon atom via a divalent hydrocarbon group that may contain an oxygen atom, provided that the order in which -(SiO)(H)R¹³-, -(SiO)(T)R¹³-, and -(SiO)(X)R¹³- are bonded together is not limited.)

In the general formula (16), each R¹³ is independently an unsubstituted or substituted monovalent hydrocarbon group, for example, an unsubstituted or substituted alkyl or aryl group having 1 to 20 carbon atoms, preferably 1 to 12 carbon atoms, similar to R⁶ described above, particularly preferably a methyl group or an ethyl group.

In addition, each T is independently a monovalent perfluoroalkyl group or monovalent perfluorooxyalkyl group bonded to a silicon atom via a divalent hydrocarbon group that may contain a silicon atom, an oxygen atom, or a nitrogen atom. Examples of the monovalent perfluoroalkyl groups and the monovalent perfluorooxyalkyl groups include those represented by the general formulae (4) and (5) described above.

In addition, each X is independently an epoxy group or trialkoxysilyl group bonded to a silicon atom via a divalent hydrocarbon group that may contain an oxygen atom.

Examples of such epoxy groups include alicyclic epoxy groups and epoxy groups represented by the following general formula (17):

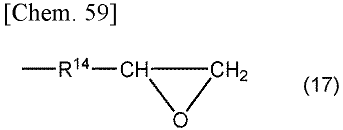

In the general formula (17), R¹⁴ is a divalent hydrocarbon group that may be interrupted by an oxygen atom and that preferably has 1 to 10 carbon atoms, more preferably 1 to 5 carbon atoms, and specific examples thereof include alkylene groups such as a methylene group, an ethylene group, a propylene group (trimethylene group or methylethylene group), a butylene group (tetramethylene group or methylpropylene group), a hexylene group (hexamethylene group), and an octylene group (octamethylene group); cycloalkylene groups such as a cyclohexylene group; and oxyalkylene groups such as an oxyethylene group, an oxypropylene group, and an oxybutylene group.

Specific examples of such epoxy groups include the following groups:

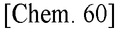

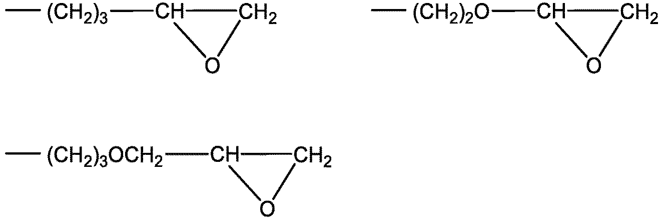

In addition, preferred alicyclic epoxy groups include an epoxycyclohexyl group represented by the following formula (18):

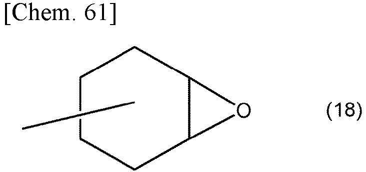

On the other hand, examples of the trialkoxysilyl groups include those represented by the following general formula (19):

-R¹⁵-Si(OR¹⁶)₃ (19).

In the general formula (19), R¹⁵ is preferably a divalent hydrocarbon group having 1 to 10 carbon atoms, more preferably 1 to 5 carbon atoms, and specific examples thereof include alkylene groups such as a methylene group, an ethylene group, a propylene group (trimethylene group or methylethylene group), a butylene group (tetramethylene group or methylpropylene group), a hexylene group (hexamethylene group), a cyclohexylene group, and an octylene group (octamethylene group). In addition, R¹⁶ is preferably a monovalent hydrocarbon group having 1 to 8 carbon atoms, more preferably 1 to 4 carbon atoms, and specific examples thereof include alkyl groups such as a methyl group, an ethyl group, and a n-propyl group.

Specific examples of such trialkoxysilyl groups include the following groups:

-(CH₂)₂-Si(OCH₃)₃

-(CH₂)₃-Si(OCH₃)₃

-(CH₂)₂-Si(OCH₂CH₃)₃

-(CH₂)₃-Si(OCH₂CH₃)₃

Examples of such components (F) include the following compounds. It is noted that Me represents a methyl group, and Et represents an ethyl group. 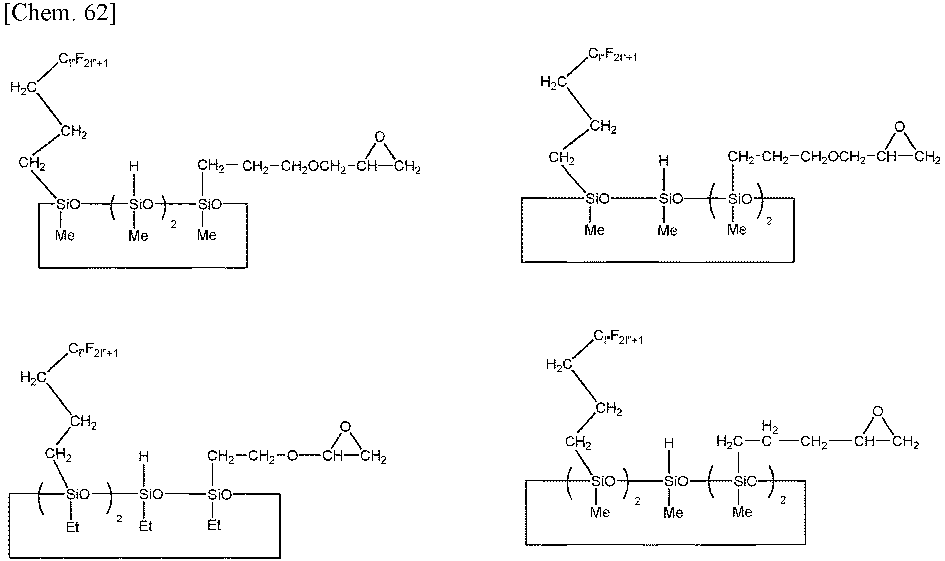 (wherein l" is a number of 1 to 10.) 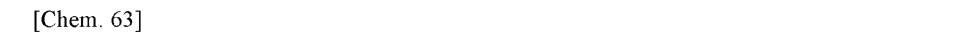 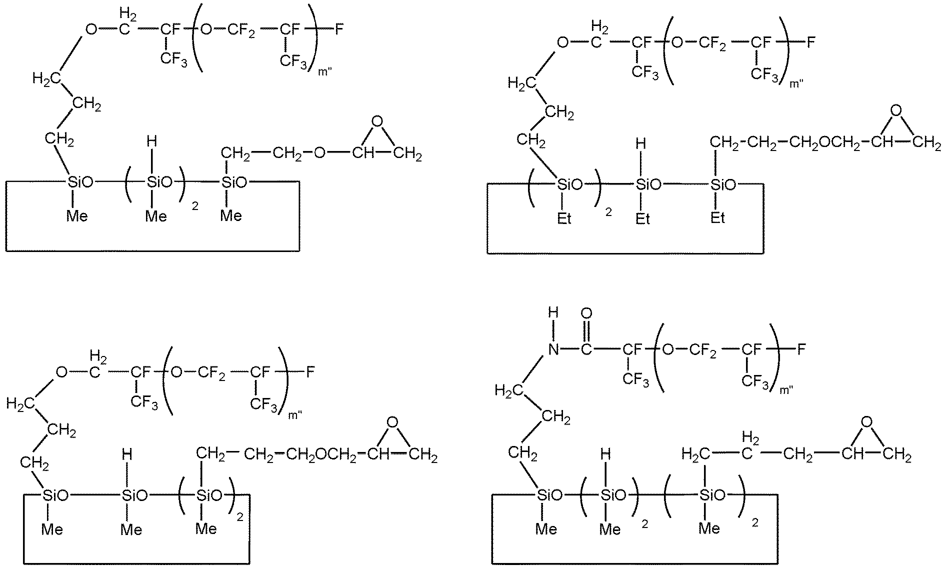 (wherein m" is a number of 1 to 50.) 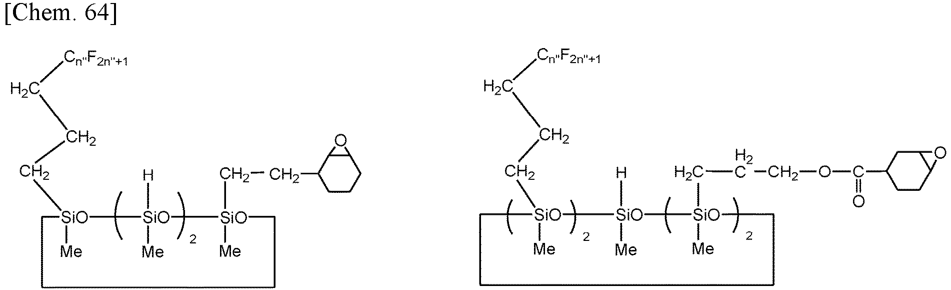 (wherein n" is a number of 1 to 10.) 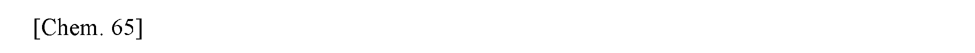 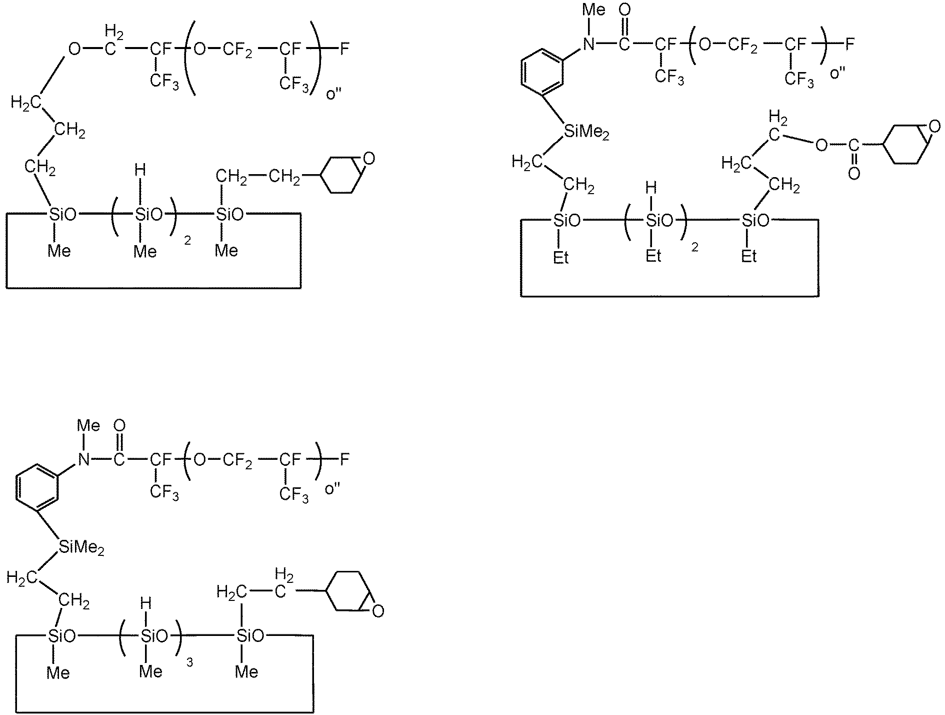 (wherein o" is a number of 1 to 50.) 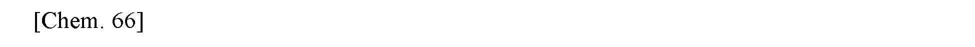 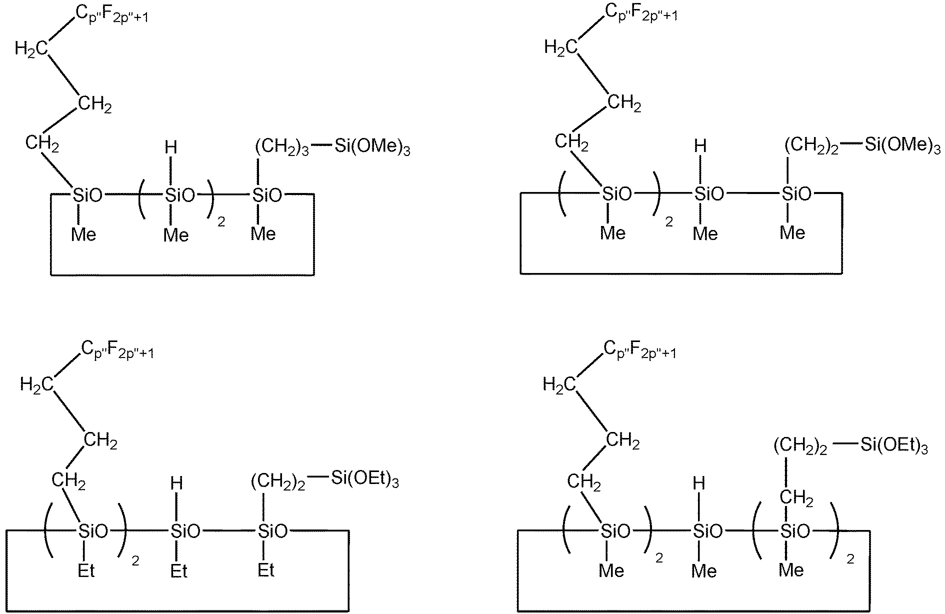 (wherein p" is a number of 1 to 10.) 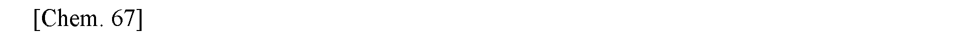 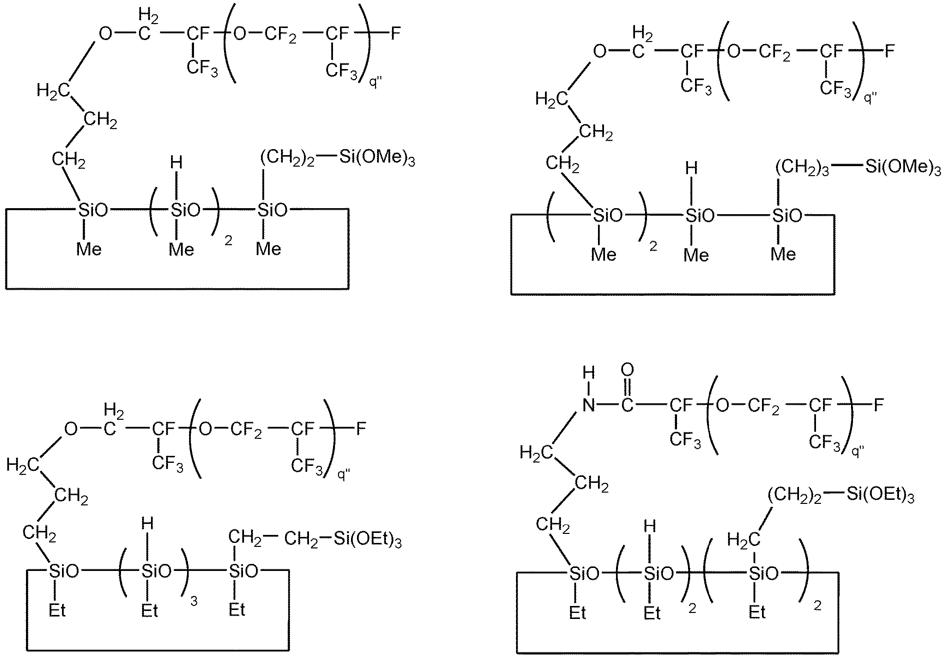 (wherein q" is a number of 1 to 50.) 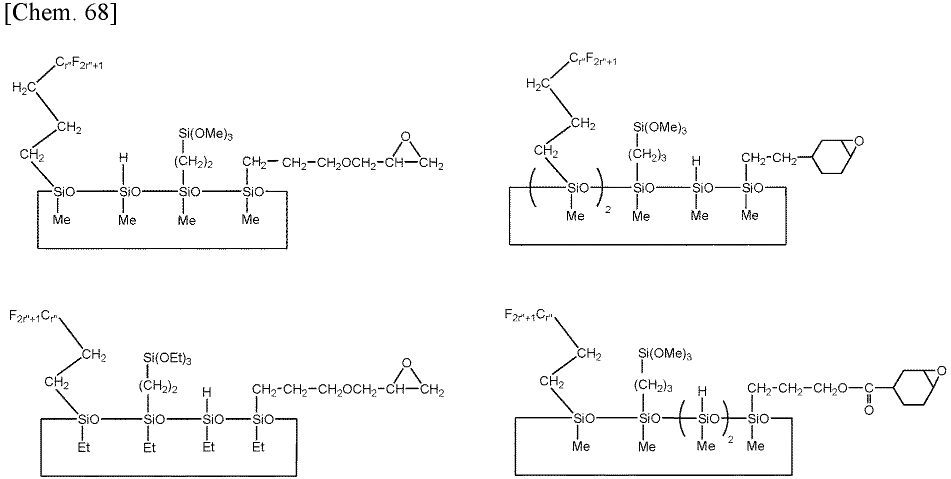 (wherein r" is a number of 1 to 10.) 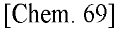 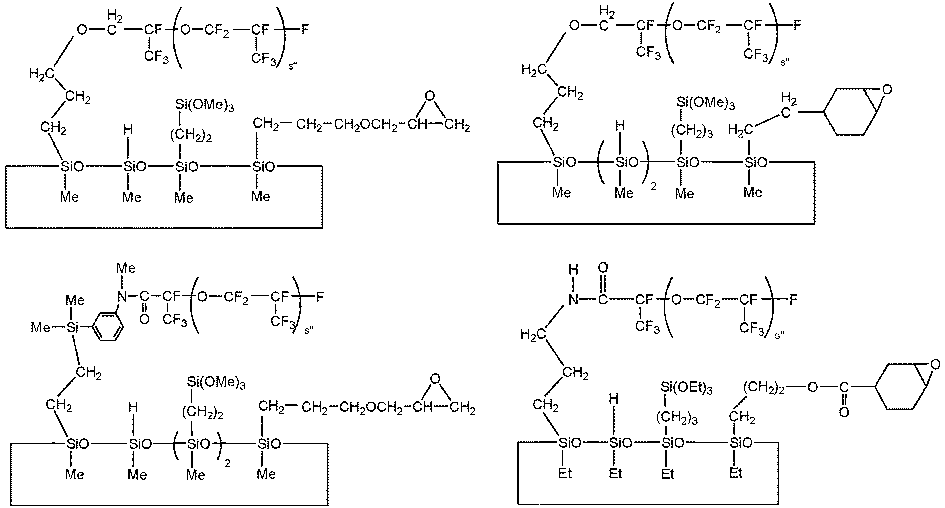 (wherein s" is a number of 1 to 50.)

These components (F) may be used alone or in a combination of two or more thereof. In addition, the component (F), when added, may be added in an amount in a range of 0.01 to 20 parts by mass, preferably in a range of 0.01 to 10 parts by mass, more preferably in a range of 0.01 to 8 parts by mass, relative to 100 parts by mass of the component (A). It is preferred that the amount of the component (F) added be 0.01 parts by mass or more since sufficient adhesion can be achieved, whereas it is preferred that the amount of the component (F) added be 20 parts by mass or less since the cured product exhibits good physical strength.

### [Other Components]

In addition to the components (A) to (F), additives may be added as optional components to the perfluoropolyether compound-containing curable composition to increase its practicality if necessary, including fillers other than the component (D), plasticizers, viscosity modifiers, flexibility-imparting agents, inorganic pigments such as titanium oxide, iron oxide, carbon black, and cobalt aluminate, heat resistance improvers such as titanium oxide, iron oxide, carbon black, cerium oxide, cerium hydroxide, zinc carbonate, magnesium carbonate, and manganese carbonate, thermal conductivity-imparting agents such as alumina, boron nitride, silicon carbide, and metal powders, and electrical conductivity-imparting agents such as carbon black, silver powder, and electrically conductive zinc oxide. These additives may be added in any amount that does not interfere with the object of the present invention.

As plasticizers, viscosity modifiers, and flexibility-imparting agents, unreactive (nonfunctional) linear polyfluoro compounds represented by the following general formulae (20) and (21) and having no functional group (alkenyl group or hydrosilyl group) that participates in the hydrosilylation addition reaction in the molecule thereof and/or polyfluoromonoalkenyl compounds represented by the following general formula (22) can be used.

F-(CF₂CF₂CF₂O)_{w}-J (20),

wherein, in the formula (20), J is a group represented by CₓF₂ₓ₊₁- (wherein x is a number of 1 to 3), and w is a number of 1 to 500, preferably a number of 2 to 300.

J-{(OCF(CF₃)CF₂)_{y}-(OCF₂CF₂)_{z}-(OCF₂)α}-O-J (21),

wherein, in the formula (21), J is as defined above, y and z are each a number of 0 to 300, preferably a number of 0 to 150, provided that y and z are not simultaneously 0, α is a number of 1 to 300, preferably a number of 1 to 150, and the repeating units may be randomly bonded together.

Rf-(L)β-CH=CH₂ (22),

wherein, in the formula (22), Rf is a group represented by the following general formula (23), L is a group represented by -CH₂-, -OCH₂-, -CH₂OCH₂-, or -CO-NR¹¹-M-, and β is 0 or 1, and

   F-[CF(CF₃)CF₂O]γ-CδF₂δ- (23)
wherein, in the formula (23), γ is a number of 1 to 200, preferably a number of 1 to 150, and δ is a number of 1 to 3.

Each group represented by L has the left end thereof bonded to Rf and the right end thereof bonded to a carbon atom. In addition, R¹¹ is a hydrogen atom, a methyl group, a phenyl group, or an allyl group, and M is -CH₂-, a group represented by the following structural formula (24), or a group represented by the following structural formula (25): 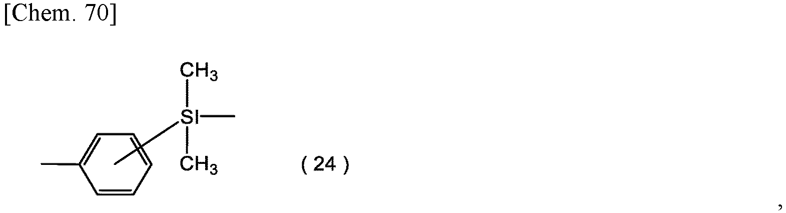
wherein the group is a dimethylphenylsilylene group represented by the o-position, the m-position, or the p-position and has the left end thereof bonded to a nitrogen atom and the right end thereof bonded to a carbon atom. 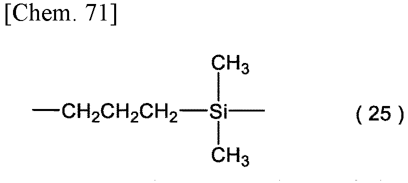
wherein the group has the left end thereof bonded to a nitrogen atom and the right end thereof bonded to a carbon atom.

Specific examples of linear polyfluoro compounds represented by the general formulae (20) and (21) include the following compounds:

F-(CF₂CF₂CF₂O)_{w'}-CF₂CF₃,

wherein w' is a number of 1 to 200,

   CF₃-{(OCF(CF₃)CF₂)_{y'}-(OCF₂)α_{'}}-O-CF₃,
wherein y' is a number of 1 to 200, α' is a number of 1 to 200, and the repeating units may be randomly bonded together, and

   CF₃-{(OCF₂CF₂)_{z'}-(OCF₂)α_{'}}-O-CF₃,
wherein z' is a number of 1 to 200, α' is a number of 1 to 200, and the repeating units may be randomly bonded together.

The linear polyfluoro compounds represented by the general formulae (20) and (21) may be used alone or in a combination of two or more thereof.

Specific examples of polyfluoromonoalkenyl compounds represented by the general formula (22) include the following compounds: 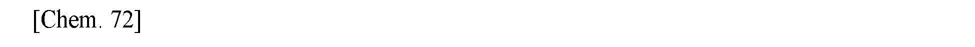 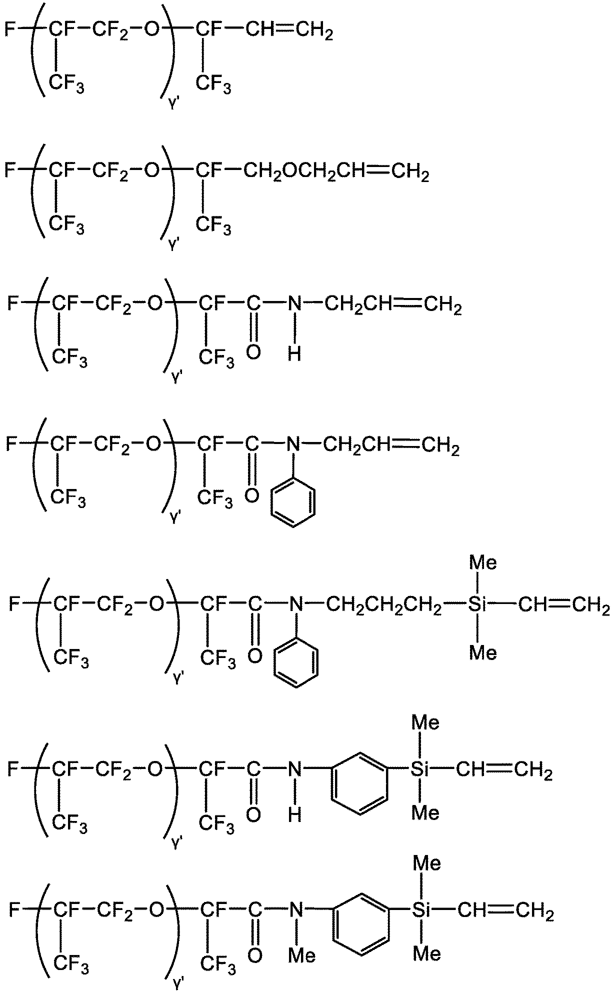 wherein γ' is a number of 1 to 200.

The polyfluoromonoalkenyl compounds represented by the general formula (22) may be used alone or in a combination of two or more thereof.

### [Method for Manufacturing Composition and Curing Conditions for Composition]

The method for manufacturing the perfluoropolyether compound-containing curable composition used as the seal member for the fuel battery stack of the present invention is not particularly limited, and the composition can be manufactured by homogeneously mixing together the components described above using a known device such as a planetary mixer, a Ross mixer, a Hobart mixer, a kneader, or a three-roll mill. In mixing, all components may be simultaneously mixed together, or a plurality of components may be mixed together in advance to which other components may then be sequentially mixed.

The thus-manufactured perfluoropolyether compound-containing curable composition is cured, preferably by heating to 50°C to 200°C to promote the reaction, thereby forming a cured product for use as a seal member of a separator for a fuel battery. The heating of the composition can last for 10 seconds to 30 minutes.

Examples of methods for providing a seal member on a separator include a method in which the composition is molded into a seal shape by a process such as compression molding, transfer molding, or injection molding and is then combined with a separator and a method in which a seal member is formed integrally with a separator substrate by a process such as dipping, coating, screen printing, or insert molding.

### [Use of Primer]

In the present invention, a primer may be used to improve adhesion to a portion to be sealed of a fuel battery stack. For example, primers such as those disclosed in JP-A-2004-331704 can be used.

### EXAMPLES

The components (A) to (G) used in the following Working Examples and Comparative Example are shown below.

In the formulae, Rf³ is a structure represented by the following formula:

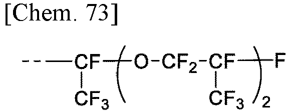

### Component (A)

(A-1): Perfluoropolyether polymer represented by the following formula (a + b = 90, alkenyl group content: 0.0120 mol/100 g): 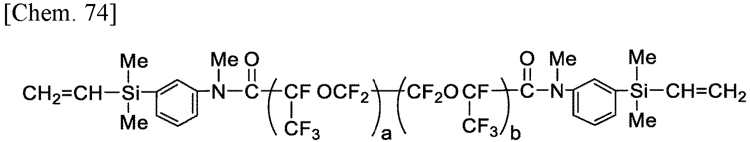
(A-2): Perfluoropolyether polymer represented by the following formula (a + b = 90, alkenyl group content: 0.0120 mol/100 g): 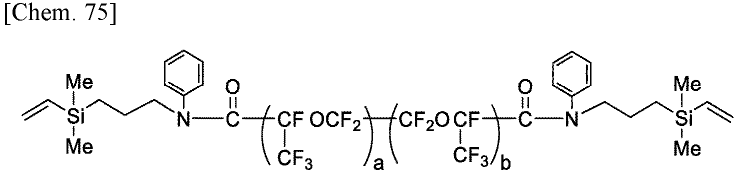
(A-3): Perfluoropolyether polymer represented by the following formula (a + b = 90, alkenyl group content: 0.0120 mol/100 g): 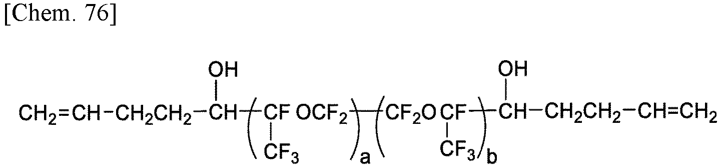
(A-4): Perfluoropolyether polymer represented by the following formula (p + q = 63, alkenyl group content: 0.0330 mol/100 g): 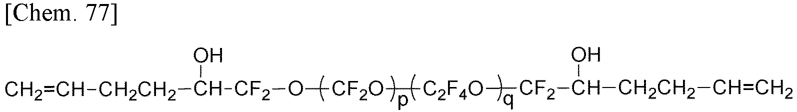
(A-5): Perfluoropolyether polymer represented by the following formula (a + b = 35, alkenyl group content: 0.0330 mol/100 g): 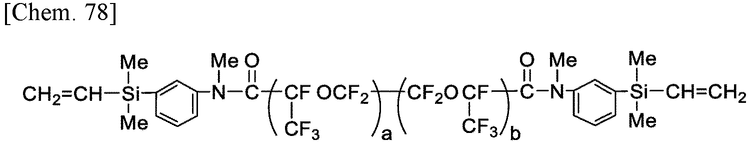
(A-6): Alkenyl group-containing polymer represented by the following formula (alkenyl group content: 0.0325 mol/100 g):

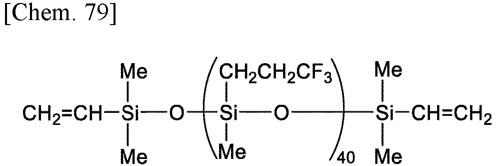

### Component (B)

(B-1): Compound represented by the following formula (SiH group content: 0.0050 mol/g): 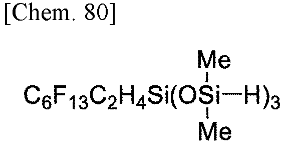
(B-2): Compound represented by the following formula (SiH group content: 0.0050 mol/g): 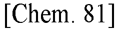 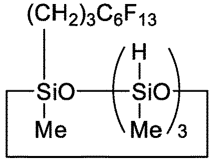
(B-3): Compound represented by the following formula (SiH group content: 0.0043 mol/g): 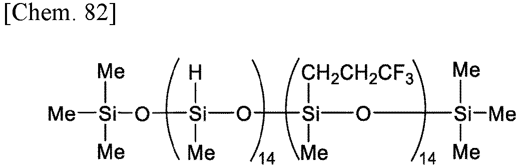
(B-4): Compound represented by the following formula (SiH group content: 0.0069 mol/g):

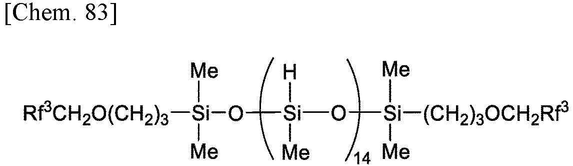

### Component (C)

(C-1): Toluene solution of platinum-divinyltetramethyldisiloxane complex (platinum concentration: 0.5% by mass)

### Component (D)

(D-1): R-972 (manufactured by Nippon Aerosil Co., Ltd., fumed silica subjected to hydrophobic surface treatment with dimethyldichlorosilane, BET specific surface area: about 130 m²/g)

### Component (E)

(E-1): 50% by mass toluene solution of 1-ethynyl-1-cyclohexanol

### Component (F)

(F-1): Compound represented by the following formula:

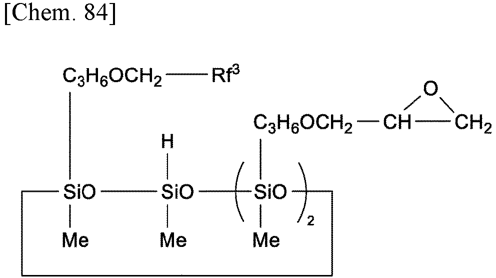

### Component (G)

### (G-1): Denka Black (manufactured by Denka Company Limited, acetylene black)

In Working Examples 1 to 11 and Comparative Example 1, the components were used in predetermined amounts shown in Table 1 to prepare compositions as follows. In addition, the compositions were molded and cured by the following method to prepare cured products, and the following test was conducted.

### Preparation of Compositions of Working Examples 1 to 11 and Comparative Example 1:

First, the components (A) and (D) were mixed and kneaded together in predetermined amounts shown in Table 1 using a planetary mixer at 120°C for 1 hour. After cooling to room temperature, the mixture was subjected to a three-roll mill process. To 130 parts by mass of the resulting mixture, the component (G) was added in a predetermined amount shown in Table 1, followed by mixing and kneading at room temperature for 10 minutes. The component (C) was then added in a predetermined amount shown in Table 1, followed by mixing and kneading at room temperature for 10 minutes. The component (E) was then added in a predetermined amount shown in Table 1, followed by mixing at room temperature for 10 minutes. The components (B) and (F) were then added in predetermined amounts shown in Table 1, followed by mixing at room temperature for 10 minutes to obtain a composition. The component (B) was added such that [SiH group of component (B)/alkenyl group of component (A)] = 1.2 (molar ratio).

### Fabrication of Cured Products of Working Examples 1 to 11 and Comparative Example 1:

The composition was subjected to press crosslinking (primary crosslinking) at 150°C for 10 minutes to form a rubber sheet with a thickness of 2.0 mm. The rubber sheet was further subjected to oven crosslinking (secondary crosslinking) at 200°C for 4 hours to fabricate a cured product.

### <Hydrofluoric Acid Resistance Test>

The rubber sheet after secondary crosslinking was die-cut into a No. 3 dumbbell (JIS K 6249) for use as a test specimen. In addition, an immersion solution with a hydrogen fluoride concentration of 500 ppm (by mass) was prepared by adding 60% by mass hydrofluoric acid to a sulfuric acid aqueous solution with a pH of 2. The test specimen was immersed in the immersion solution at 95°C for 168 hours. After the immersion test, the test specimen was sufficiently rinsed with pure water and was dried at 120°C for 2 hours. The tensile strength (JIS K 6249) of the test specimen was measured before and after the immersion test. In addition, the percent change (%) was calculated from the following equation and was listed in Table 1 together with the results of the tensile strengths before and after the immersion test: Percent change (%) = [(tensile strength after immersion test) - (tensile strength before immersion test)]/(tensile strength before immersion test) × 100

**[Table 1]**

| | | Working Example 1 | Working Example 2 | Working Example 3 | Working Example 4 | Working Example 5 | Working Example 6 | Working Example 7 | Working Example 8 | Working Example 9 | Working Example 10 | Working Example 11 | Comparative Example 1 |
|---|---|---|---|---|---|---|---|---|---|---|---|---|---|
| Component (A) | A-1 | 100 | 100 | 100 | 100 | 100 | - | - | - | - | 80 | 60 | - |
| | A-2 | - | - | - | - | - | 100 | - | - | - | - | - | - |
| | A-3 | - | - | - | - | - | - | 100 | 100 | - | - | - | - |
| | A-4 | - | - | - | - | - | - | - | - | 100 | - | - | - |
| | A-5 | - | - | - | - | | - | | - | - | 20 | 40 | - |
| | A-6 | - | - | - | - | - | - | - | - | - | - | - | 100 |
| Component (B) | B-1 | 2.88 | 2.88 | 2.88 | 2.88 | - | 2.88 | 2.88 | - | 7.94 | 3.90 | 4.91 | - |
| | B-2 | - | - | - | - | 2.88 | - | - | 2.88 | - | - | - | - |
| | B-3 | - | - | - | - | - | - | - | - | - | - | - | 9.07 |
| | B-4 | - | - | - | - | - | - | - | - | - | - | - | - |
| Component (C) | C-1 | 0.50 | 0.50 | 0.50 | 0.50 | 0.50 | 0.50 | 0.50 | 0.50 | 0.50 | 0.50 | 0.50 | 0.50 |
| Component (D) | D-1 | 30 | 30 | 30 | 30 | 30 | 30 | 30 | 30 | 30 | 30 | 30 | 30 |
| Component (E) | E-1 | 0.20 | 0.20 | 0.20 | 0.20 | 0.20 | 0.20 | 0.20 | 0.20 | 0.20 | 0.20 | 0.20 | - |
| Component (F) | F-1 | - | 0.5 | 1.0 | 5.0 | - | - | - | - | - | - | - | - |
| Component (G) | G-1 | 5.00 | 5.00 | 5.00 | 5.00 | 5.00 | 5.00 | 5.00 | 5.00 | 5.00 | 5.00 | 5.00 | 5.00 |
| Tensile strength (MPa) | Before immersion | 8.2 | 8.1 | 8.4 | 8.4 | 7.7 | 7.9 | 8.6 | 8.4 | 8.3 | 6.4 | 5.8 | 5.9 |
| | After immersion | 7.9 | 7.7 | 8.1 | 7.9 | 7.4 | 7.8 | 8.0 | 7.7 | 8.1 | 5.9 | 5.5 | 4.3 |
| | Percent change (%) | -3.7 | -4.9 | -3.6 | -6.0 | -3.9 | -1.3 | -7.0 | -8.3 | -2.4 | -7.8 | -5.2 | -27.1 |

### Reference Signs List

100 fuel battery
101 clamping member
102 end plate
200 fuel battery cell
201 separator
202 membrane electrode assembly
10a fuel gas diffusion layer
10b oxidant gas diffusion layer
11a fuel electrode catalyst layer
11b oxidant electrode catalyst layer
12 electrolyte membrane
20a oxidant gas inlet
20b oxidant gas outlet
21a cooling medium inlet
21b cooling medium outlet
22a fuel gas outlet
22b fuel gas inlet
23 flow channel groove
30 seal member

## Claims

1. A fuel battery stack formed by stacking together a plurality of fuel battery cells, each including a pair of separators and a membrane electrode assembly held therebetween, wherein each of the separators has a seal member disposed thereon, the seal member being a cured product of a perfluoropolyether compound-containing curable composition.

2. The fuel battery stack according to claim 1, wherein the perfluoropolyether compound has an alkenyl group.

3. The fuel battery stack according to claim 1 or 2, wherein the perfluoropolyether compound-containing curable composition contains:
(A) a perfluoropolyether polymer having at least two alkenyl groups per molecule;
(B) a fluorine-modified organosilicon compound having two or more hydrogen atoms bonded to silicon atoms per molecule;
(C) a hydrosilylation reaction catalyst; and
(D) a reinforcing filler.

4. The fuel battery stack according to claim 3, wherein the component (A) is at least one selected from perfluoropolyether compounds represented by the following general formulae (1) and (2):
Rf-(ZWβ)₂ (1)
Rf-(Q-(Y)δ-B)₂ (2)
wherein Rf is a divalent perfluoropolyether group, Z is independently a single bond or a divalent to octavalent organic group that may contain a nitrogen atom, an oxygen atom, a silicon atom, a phosphorus atom, or a sulfur atom and that may be halogen-substituted, W is independently a monovalent organic group having an alkenyl group at an end thereof, β is a number of 1 to 7, Q is independently a single bond or a divalent organic group, each δ is independently a number of 1 to 10, Y is independently a divalent organic group having an alkenyl group, and B is independently a hydrogen atom, an alkyl group having 1 to 4 carbon atoms, or a halogen atom.

5. The fuel battery stack according to claim 3 or 4, wherein the perfluoropolyether compound-containing curable composition contains:
the component (A) in an amount of 100 parts by mass;
the component (B) in an amount such that an amount of hydrogen atoms bonded to silicon atoms (SiH groups) in the component (B) is 0.5 to 3 mol per mole of alkenyl groups contained in the composition;
the component (C) in an amount of 0.1 to 2,000 ppm in terms of mass of platinum group metal atoms with respect to a mass of the component (A); and
the component (D) in an amount of 10 to 40 parts by mass.

6. The fuel battery stack according to any one of claims 3 to 5, wherein the perfluoropolyether compound-containing curable composition further contains a hydrosilylation reaction control agent (E).

7. The fuel battery stack according to any one of claims 3 to 6, wherein the perfluoropolyether compound-containing curable composition further contains, as an adhesion-imparting agent (F), an organopolysiloxane having, per molecule, a hydrogen atom directly bonded to a silicon atom (SiH group), a monovalent perfluoroalkyl group or a monovalent perfluorooxyalkyl group, and an epoxy group and/or a trialkoxysilyl group bonded to a silicon atom via a divalent hydrocarbon group that may contain an oxygen atom.

8. A fuel battery comprising the fuel battery stack according to any one of claims 1 to 7.
